# EUROPEAN PATENT APPLICATION

(11) **EP 3 832 163 A1**
(43) Date of publication of application: **09.06.2021**
(21) Application number: 19844377.2
(22) Date of filing: 31.07.2019
(51) Int. Cl.: F16H 7/08, F16F 1/12, F16F 1/18

(54) **TENSIONER**

(30) Priority: 01.08.2018 JP 2018145336
(71) Applicant: NHK Spring Co., Ltd., Kanagawa 236-0004 (JP); Daido Kogyo Co., Ltd., Kaga-shi, Ishikawa 922-8686 (JP)
(72) Inventor: YAMADA, Yoshio, Yokohama-shi, Kanagawa 236-0004 (JP); KOBAYASHI, Takao, Yokohama-shi, Kanagawa 236-0004 (JP); HIRAOKA, Kazuhito, Yokohama-shi, Kanagawa 236-0004 (JP); TAKAHASHI, Shuji, Yokohama-shi, Kanagawa 236-0004 (JP); SEKI, Hideaki, Kaga-shi, Ishikawa 922-8686 (JP)
(74) Representative: DREISS Patentanwälte PartG mbB
(86) International application number: PCT/JP2019/030095
(87) International publication number: WO 2020/027231

(57) **Abstract**

A tensioner (10) including a support member (12), a thrust member (32) supported so as to be capable of reciprocating movement in a straight line along a first direction (X) with respect to the support member (12), and a contact-type flat spiral spring (34). The flat spiral spring (34) is disposed adjacent to the thrust member (32) in a second direction (Y) orthogonal to the first direction (X). The flat spiral spring (34) has a coil axis direction running in a third direction (Z) orthogonal to both the first direction (X) and the second direction (Y) and includes an inner-end portion (34B) anchored to the support member (12) and an outer-end portion (34C) anchored to the thrust member (32) so as to bias the thrust member (32) in a forward-direction (XI) and so as to be wound-up by movement of the thrust member (32) in a retraction-direction (X2).

## Description

### Technical Field

The present invention relates to a tensioner employed to maintain tension of a chain or belt.

### Background Art

Japanese Patent No. 3660651 discloses a tension unit for a traction means. This tension unit includes a housing, a roller carrier pivotally connected to the housing, a pulley rotatably supported by a leading-end portion of the roller carrier and engaging with a drive belt, a bearing supporting the roller carrier with respect to the housing, a helical spring for applying tension disposed between the roller carrier and the housing, and a damping device. The damping device includes a flat belt spring provided to apply friction to a damping bush. A first end of the flat belt spring is fixed to the housing, and a second end of the flat belt spring is fixed to the damping bush. This tension unit for a traction means may be employed to maintain tension of a timing belt or timing chain provided in the engine of a car, motorbike, or the like.

### SUMMARY OF INVENTION

### Technical Problem

In the tension unit for a traction means configured as described above, for example, energy of load input from the timing belt to the roller carrier (thrust member) through the pulley can be attenuated by the damping device. Namely, hysteresis can be imparted to the resistance force of the thrust member when load is input to the thrust member from the timing belt. This enables, for example, micro-vibrations of the timing belt to be absorbed (suppressed).

However, the tension unit for a traction means configured as described above has a complex configuration in which the roller carrier with rotatably-attached pulley is pivotally supported by the housing. Moreover, the damping device is provided with the damping bush and the belt spring in addition to the helical spring, which likewise makes the configuration more complex. There is therefore room for improvement from the perspective of simplifying configuration.

In consideration of the above circumstances, an object of the present invention is to obtain a tensioner capable of effectively attenuating energy of load input from a chain or belt using a simple configuration.

### Solution to Problem

A tensioner of a first aspect of the present invention includes a support member, a thrust member, and a contact-type flat spiral spring. The thrust member is supported so as to be capable of reciprocating movement in a straight line along a first direction with respect to the support member. The contact-type flat spiral spring is disposed adjacent to the thrust member in a second direction orthogonal to the first direction. The flat spiral spring has a coil axis direction running in a third direction orthogonal to both the first direction and the second direction. The flat spiral spring includes an inner-end portion anchored to the support member and an outer-end portion anchored to the thrust member so as to bias the thrust member in a forward-direction and so as to be wound-up by movement of the thrust member in a retraction-direction.

In the tensioner of the first aspect, the leading-end side of the thrust member is able to press-contact a belt guide or chain guide due to the contact-type flat spiral spring biasing the thrust member in the forward-direction with respect to the support member. Tension of the belt or chain is accordingly maintained thereby.

Moreover, when the belt or chain presses the thrust member in a state in which the tension of the belt or chain is being maintained, the thrust member is moved in the retraction-direction with respect to the support member, and the contact-type flat spiral spring is wound-up. When this occurs, energy of load input to the thrust member can be effectively attenuated by inter-plate friction and the like arising in the contact-type flat spiral spring. This accordingly enables configuration to be simplified in comparison to a configuration equipped with a damping device including a damping bush and a belt spring. Moreover, due to adopting a configuration in which the thrust member is supported so as to be straight-line moveable with respect to the support member, the configuration can be simplified in comparison to a configuration in which a pulley-attached roller carrier is supported so as to be capable of pivoting with respect to a housing.

A tensioner of a second aspect of the present invention includes a support member, a thrust member, a swing member, and a contact-type flat spiral spring. The thrust member is supported so as to be capable of reciprocating movement in a straight line along a first direction with respect to the support member. The swing member is disposed adjacent to the thrust member in a second direction orthogonal to the first direction with a swing-axis direction running in a third direction orthogonal to both the first direction and the second direction so as to be swung on a circular arc trajectory interlocked to reciprocating movement of the thrust member. The contact-type flat spiral spring is disposed so as to have a coil axis direction running in the third direction and so as to be concentric to the swing axis of the swing member. The flat spiral spring includes an inner-end portion anchored to the support member and an outer-end portion anchored to the swing member so as to bias the thrust member in a forward-direction through the swing member and so as to be wound-up by movement of the thrust member in a retraction-direction.

In the tensioner of the second aspect, the contact-type flat spiral spring biases the thrust member in the forward-direction through the swing member so as to enable the leading-end side of the thrust member to press-contact a belt guide or chain guide. Tension of the belt or chain is accordingly maintained thereby.

Moreover, when the belt or chain presses the thrust member in a state in which the tension of the belt or chain is being maintained, the thrust member is moved in the retraction-direction with respect to the support member, and the contact-type flat spiral spring is wound-up through the swing member. When this occurs, energy of load input to the thrust member can be effectively attenuated by inter-plate friction and the like arising in the contact-type flat spiral spring. This accordingly enables configuration to be simplified in comparison to a configuration equipped with a damping device including a damping bush and a belt spring. Moreover, due to adopting a configuration in which the thrust member is supported so as to be straight-line moveable with respect to the support member, the configuration can be simplified in comparison to a configuration in which a pulley-attached roller carrier is supported so as to be capable of pivoting with respect to a housing. Furthermore, due to adopting a configuration in which the outer-end portion of the flat spiral spring, which is disposed concentric to the swing axis of the swing member swung in a circular arc shape, is anchored to the swing member described above, the stress arising in the flat spiral spring when the flat spiral spring is being wound-up or unwound can be alleviated. Namely, in cases in which a configuration is adopted in which an outer-end portion of a flat spiral spring moves in a straight line together with a thrust member, a portion on the outer-end portion side of the flat spiral spring undergoes repeated shape deformation between a circular arc shape and a straight line shape. There is accordingly a large change in the stress occurring at this portion, however, the present invention is able to avoid this situation. Durability of the flat spiral spring is thus easier to secure as a result.

A tensioner of a third aspect of the present invention includes a support member, a pressing member, and a contact-type flat spiral spring. The pressing member is a component press-molded from sheet metal and supported so as to be capable of rotating with respect to the support member so as to be press-contacted against a pressing target in one rotation direction. The contact-type flat spiral spring has a coil axis direction running in a rotation axis direction of the pressing member and includes an inner-end portion and an outer-end portion. One of the inner-end portion or the outer-end portion is anchored to the support member and another of the inner-end portion or the outer-end portion is anchored to the pressing member so as to bias the pressing member in the one rotation direction. The flat spiral spring is wound-up by rotation of the pressing member in another rotation direction.

In the tensioner of the third aspect, the pressing member is press-contacted with the pressing target, i.e. the belt guide or chain guide, due to the contact-type flat spiral spring biasing the pressing member in the one rotation direction with respect to the support member. The tension of the belt or chain is thereby maintained.

Moreover, when the belt or chain presses the pressing member in a state in which the tension of the belt or chain is being maintained, the pressing member is rotated in the other rotation direction with respect to the support member, and the contact-type flat spiral spring is wound-up thereby. When this occurs, energy of load input to the pressing member can be effectively attenuated by inter-plate friction and the like arising in the contact-type flat spiral spring. This accordingly enables configuration to be simplified in comparison to a configuration equipped with a damping device including a damping bush and a belt spring. Moreover, due to adopting a configuration in which the pressing member, which is a component press-molded from sheet metal, is press-contacted directly to the pressing target, configuration can be simplified compared to a configuration in which a pulley-attached roller carrier is supported so as to be capable of pivoting with respect to a housing.

A tensioner of a fourth aspect of the present invention is any aspect of the first aspect to the third aspect, further including a resistance force imparting section disposed inside the flat spiral spring so as to impart resistance force with respect to counter radial contraction of the flat spiral spring.

In the tensioner of the fourth aspect, the resistance force imparting section disposed inside the flat spiral spring imparts resistance force to counter radial contraction of the flat spiral spring. This accordingly enables the inter-plate friction arising in the flat spiral spring when the flat spiral spring is being wound-up to be increased, enabling the attenuation effect described above (hysteresis characteristics) to be improved.

A tensioner of a fifth aspect of the present invention is the fourth aspect, wherein the resistance force imparting section includes plural press-contact members arrayed in a circumferential direction of the flat spiral spring, and a biasing member to bias the plural press-contact members toward a radial direction outer side of the flat spiral spring so as to press-contact an inner circumferential face of the flat spiral spring.

In the tensioner of the fifth aspect, the plural press-contact members are disposed inside the flat spiral spring so as to be arrayed in the circumferential direction of the flat spiral spring. The plural press-contact members are thereby biased by the biasing portion toward the radial direction outer side of the flat spiral spring, and press-contacted against the inner circumferential face of the flat spiral spring. Thus when the flat spiral spring is being wound-up, the plural press-contact members impart resistance force to counter radial contraction of the flat spiral spring while receiving biasing force of the biasing portions. Thus by adopting a configuration in which the plural press-contact member arrayed in the circumferential direction of the flat spiral spring are press-contacted against the inner circumferential face of the flat spiral spring, a press-contact force is easily caused to act uniformly on all locations along the circumferential direction of the flat spiral spring. Moreover, friction arising between the inner circumferential face of the flat spiral spring and the plural press-contact members when the flat spiral spring is being wound-up enables a further increase in the attenuation effect described above.

A tensioner of a sixth aspect of the present invention is the fourth aspect, wherein the resistance force imparting section is a back-up spring configured from a plate-shaped spring material, and the back-up spring includes a ring-shaped portion formed in a ring shape concentric to the flat spiral spring with an outer circumferential face contacting an inner circumferential face of the flat spiral spring, and an anchor portion extending from a one-end portion of the ring-shaped portion toward a center of the ring-shaped portion and anchored to the support member.

In the tensioner of the sixth aspect, the back-up spring configured from a plate-shaped spring material has the outer circumferential face of the ring-shaped portion, which is formed in a ring shape concentric to the flat spiral spring, contacting the inner circumferential face of the flat spiral spring. The anchor portion extending from the one-end portion of the ring-shaped portion toward the center of the ring-shaped portion is anchored to the support member. The ring-shaped portion of the back-up spring accordingly imparts resistance force to counter radial contraction of the flat spiral spring when the flat spiral spring is being wound-up. The back-up spring configured from the plate-shaped spring material accordingly configures a resistance force imparting section, enabling a simple configuration for the resistance force imparting section. Moreover, the attenuation effect described above can be further raised by the friction and the like arising between the flat spiral spring and the ring-shaped portion when the flat spiral spring is being wound-up.

A tensioner of a seventh aspect of the present invention is the sixth aspect, further including a radial-contraction restriction member and a rotation limiting section. The radial-contraction restriction member is supported so as to be capable of rotating about an axis running in the third direction with respect to the support member and is engaged with an other-end portion of the ring-shaped portion. The rotation limiting section is configured to permit rotation of the radial-contraction restriction member with respect to the support member in one direction about the axis interlocked to radial enlargement of the ring-shaped portion, and to limit rotation of the radial-contraction restriction member with respect to the support member in another direction about the axis interlocked to radial contraction of the ring-shaped portion.

In the tensioner of the seventh aspect, when the flat spiral spring and the ring-shaped portion of the back-up spring radially enlarge due to the thrust member moving in the forward-direction with respect to the support member, the radial-contraction restriction member is rotated in the one direction about the axis along the third direction with respect to the support member interlocked to the radial enlargement of the ring-shaped portion. When this occurs, rotation of the radial-contraction restriction member in the one direction about the axis is permitted by the rotation limiting section.

However, when the belt or chain presses the thrust member and the thrust member attempts to move in the retraction-direction with respect to the support member, the flat spiral spring and the ring-shaped portion of the back-up spring attempt to contract radially. When this occurs, although the radial-contraction restriction member attempts to rotate in the other direction about the axis with respect to the support member interlocked to the radial contraction of the ring-shaped portion, the rotation of the radial-contraction restriction member in the other direction about the axis is restricted by the rotation limiting section. In such cases, the flat spiral spring is wound-up in a state in which radial contraction of the inner circumferential face is restricted by the ring-shaped portion due to the thrust member attempting to move in the retraction-direction in the state in which the ring-shaped portion is restricted from radial contraction. The inter-plate friction arising in the flat spiral spring is accordingly increased. As a result, the effect to suppress micro-vibrations of a chain or belt is further enhanced due to retraction of the thrust member with respect to the support member being suppressed (limited).

The tensioner of the eighth aspect of the present invention is the sixth aspect wherein, taking a rotation direction to wind-up the flat spiral spring as being a wind-up direction and a rotation direction to unwind the flat spiral spring as being an unwind direction, the ring-shaped portion extends from the anchor portion in the wind-up direction, and, as viewed along the third direction, the one-end portion of the ring-shaped portion is disposed in a range from a position at 0° to a position at 90° in the unwind direction about the center of the ring-shaped portion with respect to a virtual straight line extending along the second direction from the center of the ring-shaped portion toward the thrust member.

In the tensioner of the eighth aspect, as stated above, the outer circumferential face of the ring-shaped portion of the back-up spring, which is formed in a ring shape concentric to the flat spiral spring, contacts the inner circumferential face of the flat spiral spring, whereas the anchor portion of the back-up spring, which extends from the one-end portion of the ring-shaped portion toward the center of the ring-shaped portion, is anchored to the support member. Moreover, taking the rotation direction to wind-up the flat spiral spring as the wind-up direction and the rotation direction to unwind the flat spiral spring as the unwind direction, the ring-shaped portion extends from the anchor portion in the wind-up direction. Moreover, as viewed from the third direction (the coil axis direction of the flat spiral spring), the one-end portion of the ring-shaped portion (the end portion extended from the anchor portion) is disposed in a range from a position at 0° to a position at 90° in the unwind direction about the center of the ring-shaped portion with respect to a virtual straight line extending along the second direction (a direction of adjacency between the flat spiral spring and the thrust member) from the center of the ring-shaped portion toward the thrust member. Namely, the location of the one-end portion side of the ring-shaped portion is disposed close to the thrust member.

In cases in which the location of the one-end portion side of the ring-shaped portion is disposed away from the thrust member, load applied to the outer-end portion of the flat spiral spring by movement in the retraction-direction of the thrust member acts as bending load on the flat spiral spring and on the back-up spring. This leads to a deterioration in the conversion efficiency into load for winding-up the flat spiral spring. The inter-plate friction arising in the flat spiral spring is reduced as a result, and the hysteresis characteristics are reduced. In contrast thereto, in cases in which the location of the one-end portion side of the ring-shaped portion is disposed close to the thrust member as in the present invention, load applied to the outer-end portion of the flat spiral spring by movement of the thrust member in the retraction-direction does not readily act as bending load on the flat spiral spring and on the back-up spring. This leads to good conversion efficiency into load for winding-up the flat spiral spring. The inter-plate friction arising in the flat spiral spring is increased as a result, and the hysteresis characteristics are increased.

A tensioner of a ninth aspect of the present invention is the sixth aspect or the eighth aspect, wherein the ring-shaped portion is formed by the plate-shaped spring material being wound into at least 1.0 full turn.

In the tensioner of the ninth aspect, the ring-shaped portion of the back-up spring is formed by the plate-shaped spring material being wound into at least 1.0 full turn. The one-end side (free-end side) of the ring-shaped portion is thereby prevented from deforming further toward the center of the ring-shaped portion than the one-end side (anchored-end side) of the ring-shaped portion when the flat spiral spring is being wound-up. This makes it easier to achieve uniform radial contraction at all circumferential direction locations of the ring-shaped portion. As a result, the resistance force imparted from the ring-shaped portion to counter radial contraction of the flat spiral spring is readily imparted uniformly at all circumferential direction locations of the flat spiral spring.

The tensioner of a tenth aspect of the present invention is any aspect from the first aspect to the sixth aspect, further including a retraction limiting section configured to permit movement of the thrust member in the forward-direction with respect to the support member and to limit movement of the thrust member in the retraction-direction with respect to the support member.

In the tensioner of the tenth aspect, the retraction limiting section permits movement of the thrust member in the forward-direction with respect to the support member and limits movement of the thrust member in the retraction-direction with respect to the support member. Thus in cases in which excessive load has been input to the thrust member from a chain or belt, excessive retraction of the thrust member can be prevented, accordingly enabling the behavior of the chain or belt to be continuously stabilized.

A tensioner of an eleventh aspect of the present invention is the first aspect, or any aspect from out of the fourth aspect to the tenth aspect when dependent on the first aspect, wherein as viewed along the first direction, the thrust member has an open cross-section profile open on a flat spiral spring side, and a portion that includes the outer-end portion of the flat spiral spring is disposed inside the thrust member.

In the tensioner of the eleventh aspect, the portion of the flat spiral spring that includes the outer-end portion of the flat spiral spring is disposed inside the thrust member having an open cross-section profile open on the flat spiral spring side as viewed along the first direction (movement direction of the thrust member). This accordingly enables a more compact tensioner to be achieved.

A tensioner of a twelfth aspect of the present invention is the first aspect, or any aspect from out of the fourth aspect to the eleventh aspect when dependent on the first aspect, wherein the thrust member is a component press-molded from sheet metal.

In the tensioner of the twelfth aspect, the thrust member is a component press-molded from sheet metal, and so the manufacturing cycle time can be reduced, and a reduction in manufacturing costs is facilitated, in comparison to cases in which manufacture of the thrust member involves machining, forging, or the like. A reduction in weight of the thrust member is also facilitated.

A tensioner of a thirteenth aspect of the present invention is the first aspect, or any aspect from out of the fourth aspect to the tenth aspect when dependent on the first aspect, wherein the thrust member is a component press-molded from sheet metal and has a flat plate shape.

In the tensioner of the thirteenth aspect, the thrust member is a component press-molded from sheet metal in a flat plate shape, and so the thrust member can be manufactured by punching from sheet metal. This enables a reduction in size and weight to be achieved for the thrust member, and enables a further reduction in manufacturing costs.

A tensioner of a fourteenth aspect of the present invention is any aspect from out of the first aspect to the thirteenth aspect, wherein the support member is a component press-molded from sheet metal.

In the tensioner of the fourteenth aspect, the support member is a component press-molded from sheet metal, and so the manufacturing cycle time can be reduced, and a reduction in manufacturing costs is facilitated, in comparison to cases in which manufacture of the support member involves machining, forging, or the like. A reduction in weight of the support member is also facilitated.

### Advantageous Effects

As described above, in the tensioner according to the present invention, the energy of load input from a chain or belt can be effectively attenuated by a simple configuration.

### BRIEF DESCRIPTION OF DRAWINGS

Fig. 1 is a front view illustrating a tensioner according to a first exemplary embodiment of the present invention.
Fig. 2 is a side view illustrating a tensioner according to the first exemplary embodiment of the present invention.
Fig. 3 is a plan view illustrating a tensioner according to the first exemplary embodiment of the present invention.
Fig. 4 is a perspective view illustrating a tensioner according to the first exemplary embodiment of the present invention.
Fig. 5 is a perspective view illustrating a tensioner according to a second exemplary embodiment of the present invention.
Fig. 6 is a front view illustrating a tensioner according to a third exemplary embodiment of the present invention.
Fig. 7 is a perspective view illustrating a tensioner according to the third exemplary embodiment of the present invention.
Fig. 8 is a front view illustrating a tensioner according to a fourth exemplary embodiment of the present invention.
Fig. 9 is a perspective view illustrating a tensioner according to the fourth exemplary embodiment of the present invention.
Fig. 10 is a partial cross-section illustrating a tensioner according to a fifth exemplary embodiment of the present invention.
Fig. 11 is a partial cross-section illustrating a tensioner according to the fifth exemplary embodiment of the present invention, in a state sectioned along line F11-F11 in Fig. 10.
Fig. 12 is a partial cross-section illustrating a tensioner according to a sixth exemplary embodiment of the present invention.
Fig. 13 is a partial cross-section illustrating a tensioner according to the sixth exemplary embodiment of the present invention, in a state sectioned along line F13-F13 in Fig. 12.
Fig. 14 is a partial cross-section illustrating a tensioner according to a seventh exemplary embodiment of the present invention.
Fig. 15 is a partial cross-section illustrating a tensioner according to an eighth exemplary embodiment of the present invention.
Fig. 16 is a front view illustrating a tensioner according to a ninth exemplary embodiment of the present invention.

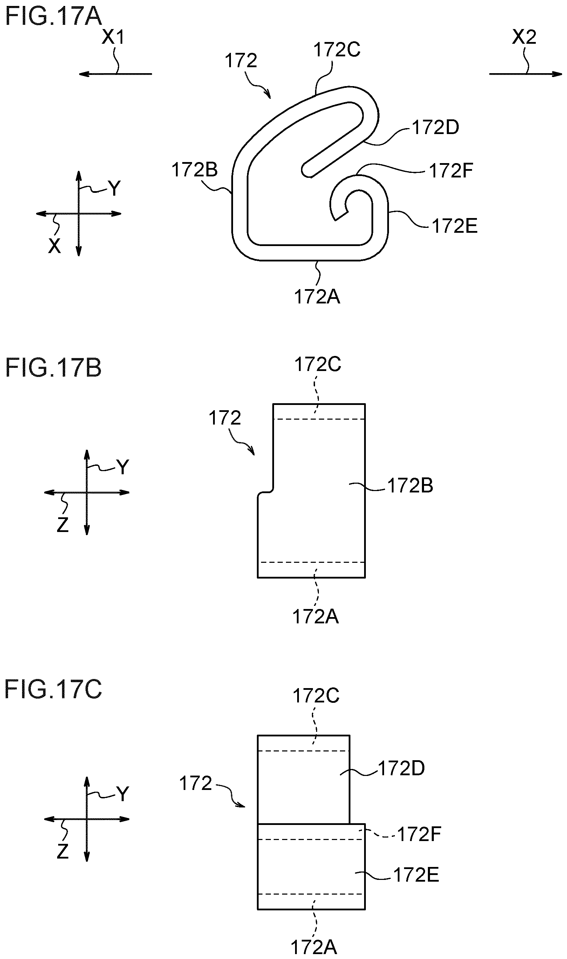

Fig. 17A is a front view illustrating an inner-end fixing member according to the ninth exemplary embodiment of the present invention.
Fig. 17B is a left-side view illustrating an inner-end fixing member according to the ninth exemplary embodiment of the present invention.
Fig. 17C is a right-side view illustrating an inner-end fixing member according to the ninth exemplary embodiment of the present invention.
Fig. 18 is a front view illustrating a tensioner according to a tenth exemplary embodiment of the present invention.

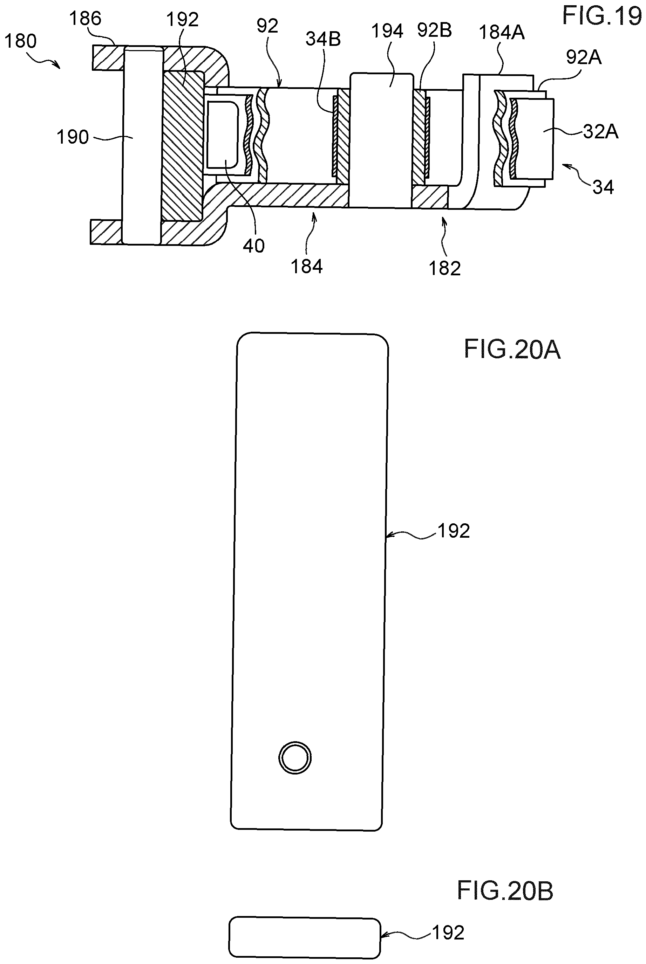

Fig. 19 is a cross-section as sectioned along line F19-F19 in Fig. 18.
Fig. 20A is a side view illustrating a thrust member according to the tenth exemplary embodiment of the present invention.
Fig. 20B is an end-on view illustrating a thrust member according to the tenth exemplary embodiment of the present invention.
Fig. 21 is a perspective view illustrating a tensioner according to an eleventh exemplary embodiment of the present invention.
Fig. 22 is a perspective view illustrating a tensioner according to the eleventh exemplary embodiment of the present invention.
Fig. 23A is a front view illustrating a tensioner according to the eleventh exemplary embodiment of the present invention.
Fig. 23B is a plan view illustrating a tensioner according to the eleventh exemplary embodiment of the present invention.
Fig. 23C is a side view illustrating a tensioner according to the eleventh exemplary embodiment of the present invention.
Fig. 24 is a diagram in which illustration a plate of a lateral slippage prevention member has been omitted from the configuration illustrated in Fig. 23A.
Fig. 25 is a perspective view illustrating a support member according to the eleventh exemplary embodiment of the present invention.
Fig. 26 is a cross-section as sectioned along line F26-F26 in Fig. 23A.
Fig. 27 is a partial cross-section illustrating a tensioner according to a twelfth exemplary embodiment of the present invention, as viewed from a front face side, with a support member illustrated in a state in which sectioned along line F27-F27 in Fig. 29.
Fig. 28 is a plan view illustrating a tensioner according to the twelfth exemplary embodiment of the present invention.
Fig. 29 is a side view illustrating a tensioner according to the twelfth exemplary embodiment of the present invention.
Fig. 30A is a front view illustrating a support member according to the twelfth exemplary embodiment of the present invention.
Fig. 30B is a plan view illustrating a support member according to the twelfth exemplary embodiment of the present invention.
Fig. 30C is a side view illustrating a support member according to the twelfth exemplary embodiment of the present invention.
Fig. 31A is a front view illustrating a pressing member according to the twelfth exemplary embodiment of the present invention.
Fig. 31B is a plan view illustrating a pressing member according to the twelfth exemplary embodiment of the present invention.
Fig. 31C is a side view illustrating a pressing member according to the twelfth exemplary embodiment of the present invention.
Fig. 32 is a front view illustrating a modified example of the twelfth exemplary embodiment of the present invention.
Fig. 33A is a front view illustrating a tensioner according to the fourth exemplary embodiment of the present invention. A state is illustrated therein in which, as viewed along a third direction, a one-end portion of a ring-shaped portion of a back-up spring (referred to hereafter as the "back-up spring phase") is set at a position located at -90° about the center of the ring-shaped portion of the back-up spring with respect to a virtual straight line extending along a second direction from the center of the ring-shaped portion toward a thrust member.
Fig. 33B is a front view illustrating a tensioner according to the fourth exemplary embodiment of the present invention, illustrating a state in which the back-up spring phase is set at a position located at -60° about the center of the ring-shaped portion.
Fig. 33C is a front view illustrating a tensioner according to the fourth exemplary embodiment of the present invention, illustrating a state in which the back-up spring phase is set at a position located at 0° about the center of the ring-shaped portion.
Fig. 33D is a front view illustrating a tensioner according to the fourth exemplary embodiment of the present invention, illustrating a state in which the back-up spring phase is set at a position located at 60° about the center of the ring-shaped portion.
Fig. 33E is a front view illustrating a tensioner according to the fourth exemplary embodiment of the present invention, illustrating a state in which the back-up spring phase is set at a position located at 90° about the center of the ring-shaped portion.
Fig. 33F is a front view illustrating a tensioner according to the fourth exemplary embodiment of the present invention, illustrating a state in which the back-up spring phase is set at a position located at 180° about the center of the ring-shaped portion.
Fig. 33G is a front view illustrating a tensioner according to the fourth exemplary embodiment of the present invention, illustrating a state in which the back-up spring phase is set at a position located at 270° about the center of the ring-shaped portion.
Fig. 34 is a graph illustrating a relationship between a back-up spring phase and dissipation percentage in a tensioner according to the fourth exemplary embodiment of the present invention.
Fig. 35 is graph illustrating a relationship between load input to a thrust member and stroke of the thrust member in a tensioner according to the fourth exemplary embodiment of the present invention.

### DESCRIPTION OF EMBODIMENTS

### First Exemplary Embodiment

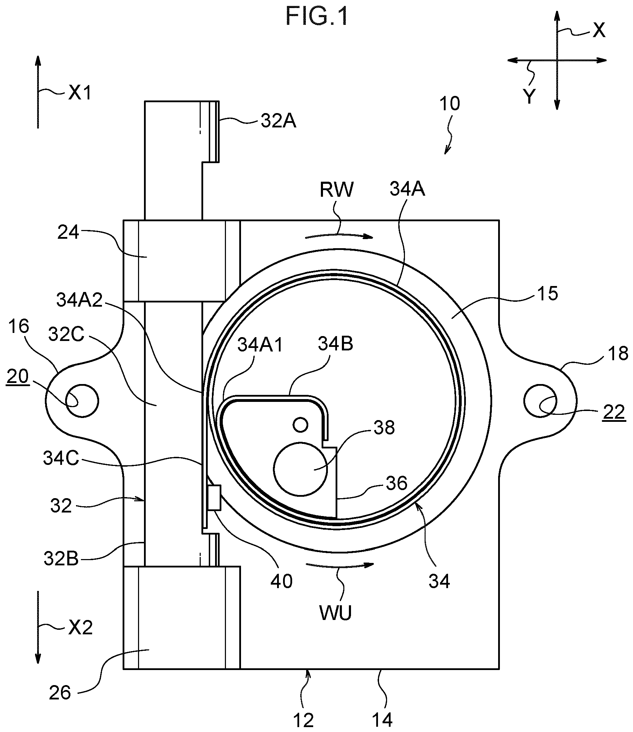

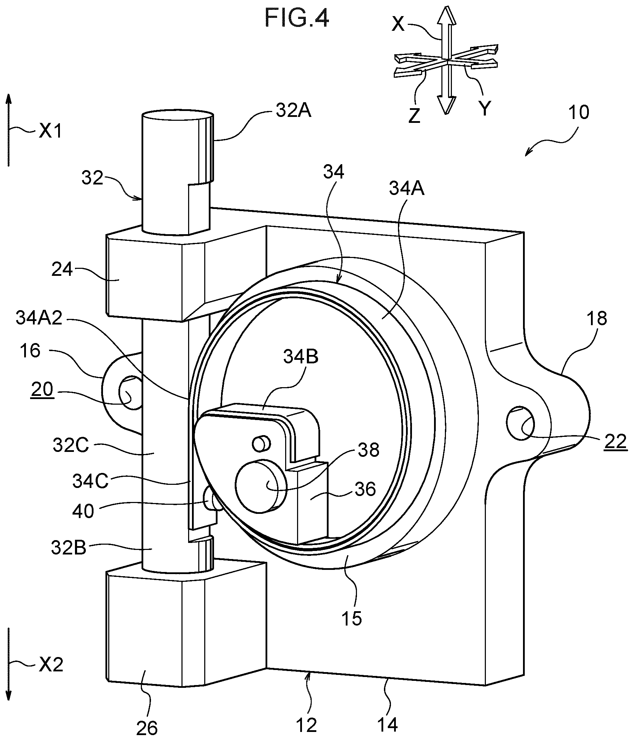

Explanation follows regarding a tensioner 10 according to a first exemplary embodiment of the present invention, with reference to Fig. 1 to Fig. 4. For ease of explanation, in the drawings the arrows X, Y, and Z respectively indicate directions of a first direction, a second direction, and a third direction as appropriate. The first direction X, the second direction Y, and the third direction Z are mutually orthogonal to one another.

### Configuration

As illustrated in Fig. 1 to Fig. 4, the tensioner 10 according to the first exemplary embodiment includes a support member 12, a thrust member 32 supported so as to capable of a reciprocating movement in a straight line along the first direction X with respect to the support member 12, and a contact-type flat spiral spring 34 disposed adjacent to the thrust member 32 in the second direction Y that is orthogonal to the first direction X. The flat spiral spring 34 has an coil axis direction running in the third direction Z that is orthogonal to both the first direction X and the second direction Y. An inner-end portion 34B of the flat spiral spring 34 is anchored to the support member 12, and an outer-end portion 34C of the flat spiral spring 34 is anchored to the thrust member 32. The flat spiral spring 34 is configured so as to bias the thrust member 32 in a forward-direction X1, this corresponding to one side in the first direction X, and so as to be wound-up by movement of the thrust member 32 in a retraction-direction X2, this corresponding to the other side in the first direction X. Detailed explanation follows regarding each of these configuration elements. Note that in the following explanation, the first direction X is also referred to as the "reciprocating direction X", the second direction Y is also referred to as the "spring-adjacency direction Y", and the third direction Z is also referred to as the "coil axis direction Z".

### Support Member

The support member 12 is, for example, formed from metal, and includes a plate shaped support member body 14 having a plate thickness direction in the coil axis direction Z of the flat spiral spring 34. The support member body 14 is formed with an elongated rectangular profile with its length direction running in the reciprocating direction X as viewed along the coil axis direction Z. Fixing portions 16, 18 that protrude toward the width direction outsides of the support member body 14 are formed toward the length direction center of the two width direction (spring-adjacency direction Y) end portions of the support member body 14. Through holes 20, 22 are respectively formed penetrating through the fixing portions 16, 18 in the coil axis direction Z. Bolts or the like are inserted through the through holes 20, 22 in a configuration to fix the support member 12 to a cylinder block of a non-illustrated engine. Note that the support member 12 may be integrally molded to the engine cylinder block.

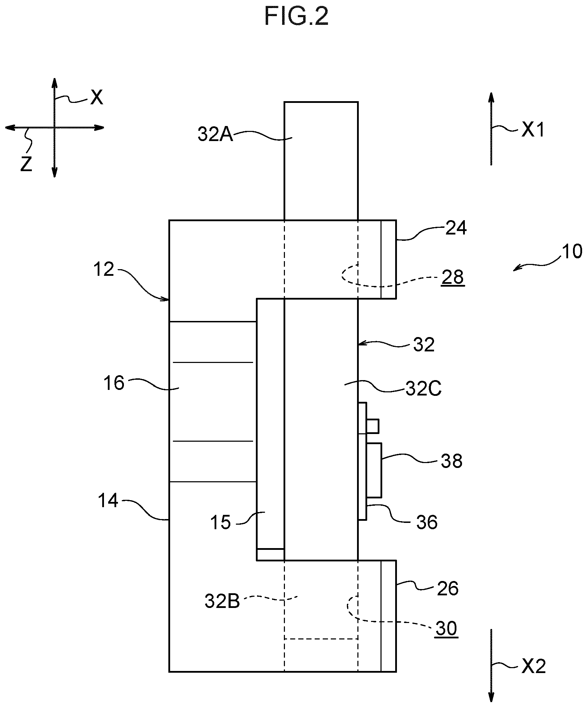

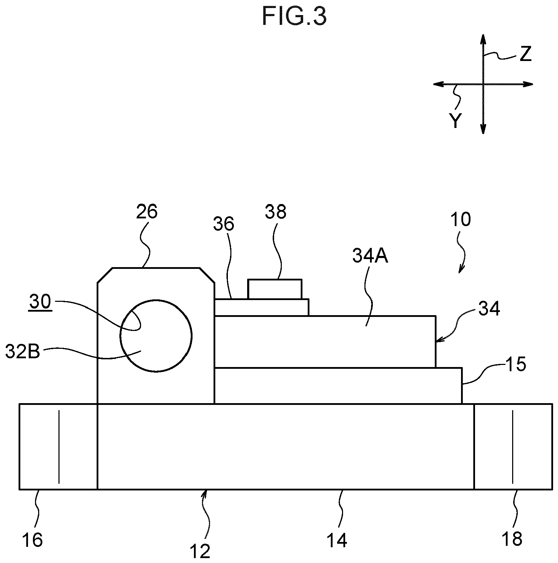

A leading-end side support portion 24 and a base-end side support portion 26 are respectively formed so as to project toward one side in the coil axis direction Z at a width direction end portion of the support member body 14. The leading-end side support portion 24 is formed at one length direction end portion (an end portion on the forward-direction X1 side) of the support member 12, and the base-end side support portion 26 is formed at the other length direction end portion (an end portion on the retraction-direction X2 side) of the support member 12. As illustrated in Fig. 1 to Fig. 4, the leading-end side support portion 24 and the base-end side support portion 26 are each formed in a substantially rectangular block shape. A through hole 28 (not illustrated in the drawings, with the exception of Fig. 2) and a through hole 30 (not illustrated in the drawings, with the exception of Fig. 2 and Fig. 3) are formed in the reciprocating direction X through the leading-end side support portion 24 and the base-end side support portion 26. The through holes 28, 30 are provided so as to align with the thrust member 32.

### Thrust Member

The thrust member 32 is, for example, formed from metal, and is formed in a substantially circular column shape with its axial direction running in the reciprocating direction X. More specifically, the thrust member 32 is formed with a circular column shaped leading-end portion (axial direction one-end portion) 32A and base-end portion (axial direction other-end portion) 32B. A length direction intermediate portion 32C of the thrust member 32 is notched on one side in the spring-adjacency direction Y (corresponding to the right side in Fig. 1) so as to have a D-shaped cut profile. The base-end portion 32B of the thrust member 32 is inserted into the circular through hole 30 formed through the base-end side support portion 26 so as to be capable of sliding therein. A portion on the leading-end portion 32A side of the length direction intermediate portion 32C of the thrust member 32 is inserted through the circular through hole 28 formed through the leading-end side support portion 24 so as to be capable of sliding therein.

The thrust member 32 that is slidably inserted through the through holes 28, 30 as described above is supported so as to be capable of reciprocating movement in a straight line (straight-line moveable) along the reciprocating direction X with respect to the support member 12. Namely, the thrust member 32 is able to move (slide) in the forward-direction X1 and the retraction-direction X2 with respect to the support member 12. The leading-end portion 32A side of the thrust member 32 projects beyond the support member 12 in the forward-direction X1. The leading-end portion 32A of the thrust member 32 is configured so as to be pressed against a non-illustrated timing belt or timing chain (belt guide, chain guide, or the like) by the biasing force of the flat spiral spring 34.

### Flat Spiral Spring

The flat spiral spring 34 is configured by a plate-shaped spring material (plate spring material), and includes a coil portion 34A formed by the plate spring material being wound into a flat-spiral shape, the inner-end portion 34B extending from an inner end 34A1 of the coil portion 34A toward the center of the coil portion 34A, and an outer-end portion 34C extending from an outer end 34A2 of the coil portion 34A along a direction tangential to the coil portion 34A at the outer end 34A2. Note that although the coil portion 34A according to the present exemplary embodiment is configured by the plate spring material described above being wound into approximately 2.0 full turns, there is no limitation thereto, and the number of turns of the plate spring material in the coil portion 34A may be modified as appropriate.

The flat spiral spring 34 is disposed on the same side of the support member body 14 as the thrust member 32, in an orientation in which the plate thickness direction of the support member body 14 is aligned with the coil axis direction Z of the coil portion 34A. The flat spiral spring 34 is adjacent in the spring-adjacency direction Y to the length direction intermediate portion 32C of the thrust member 32. A circular column shaped seat 15 is formed to the support member body 14 so as to project toward the flat spiral spring 34, and the flat spiral spring 34 is supported from one side in the coil axis direction Z by the seat 15.

The inner end 34A1 and the outer end 34A2 of the coil portion 34A are disposed at an edge of the coil portion 34A on the thrust member 32 side thereof. A leading end side of the inner-end portion 34B, which extends from the inner end 34A1 of the coil portion 34A toward the center of the coil portion 34A, is bent toward the retraction-direction X2, and is hooked over an inner-end fixing member 36 fixed to the seat 15. The inner-end portion 34B of the flat spiral spring 34 is thus anchored to the support member 12. The inner-end fixing member 36 is formed with a substantially fan-shaped block profile as viewed along the coil axis direction Z, and is fixed to the seat 15 by a fixing (for example a rivet or screw). The inner-end fixing member 36 is interposed between the inner-end portion 34B and the coil portion 34A.

The outer-end portion 34C of the flat spiral spring 34 has a flat plate shape and extends in the retraction-direction X2 from the outer end 34A2 of the coil portion 34A, so as to be disposed in contact with the length direction intermediate portion 32C of the thrust member 32. A leading-end portion of the outer-end portion 34C (an end portion on the retraction-direction X2 side thereof) is anchored (fixed in this example) to the thrust member 32 using an anchor member 40 (for example a rivet or screw). In Fig. 1, the arrow WU indicates a wind-up direction corresponding to a rotation direction to wind-up the flat spiral spring 34, and the arrow RW indicates an unwind direction corresponding to a rotation direction to unwind the flat spiral spring 34.

### Operation and Advantageous Effects

Next, explanation follows regarding operation and advantageous effects of the first exemplary embodiment.

In the tensioner 10 configured as described above, the thrust member 32 is moved in the forward-direction X1 with respect to the support member 12 by biasing force of the contact-type flat spiral spring 34, and the leading-end portion 32A of the thrust member 32 is thereby pressed against the timing belt or timing chain (belt guide, chain guide, or the like). Tension is thereby maintained in the timing belt or the timing chain.

Moreover, when the timing belt or timing chain presses the thrust member 32 in a state in which the tension of the timing belt or timing chain is being maintained, the thrust member 32 is moved in the retraction-direction X2 with respect to the support member 12, and the contact-type flat spiral spring 34 is wound-up. When this occurs, energy of load input to the thrust member 32 is effectively attenuated by inter-plate friction arising in the contact-type flat spiral spring 34, loss due to bending stress arising in the flat spiral spring 34, and friction arising between the flat spiral spring 34 and the thrust member 32. This enables micro-vibrations of the timing belt or timing chain to be effectively absorbed (suppressed). This reduces mechanical loss of the engine, and thus improves the fuel efficiency of the engine.

Moreover, due to the tensioner 10 having a configuration in which energy of load input to the thrust member 32 is attenuated by the inter-plate friction arising in the contact-type flat spiral spring 34, the configuration can be simplified compared to a configuration of a damping device including a damping bush and belt spring. Moreover, due to the tensioner 10 having a configuration in which the thrust member 32 is supported so as to be capable of movement in a straight line (straight-line moveable) with respect to the support member 12, configuration can be simplified compared to a configuration in which a roller carrier with attached pulley is supported so as to be capable of pivoting with respect to a housing. The present exemplary embodiment is thus capable of achieving a simpler basic configuration for a tensioner provided with a support member, a thrust member, a spring, and a damping section. This accordingly enables a tensioner capable of improving fuel efficiency to be provided at lower cost.

Next, explanation follows regarding other exemplary embodiments of the present invention. Note that configurations and operation that are basically the same as in the first exemplary embodiment are appended with the same reference numerals as in the first exemplary embodiment, and explanation thereof is omitted.

### Second Exemplary Embodiment

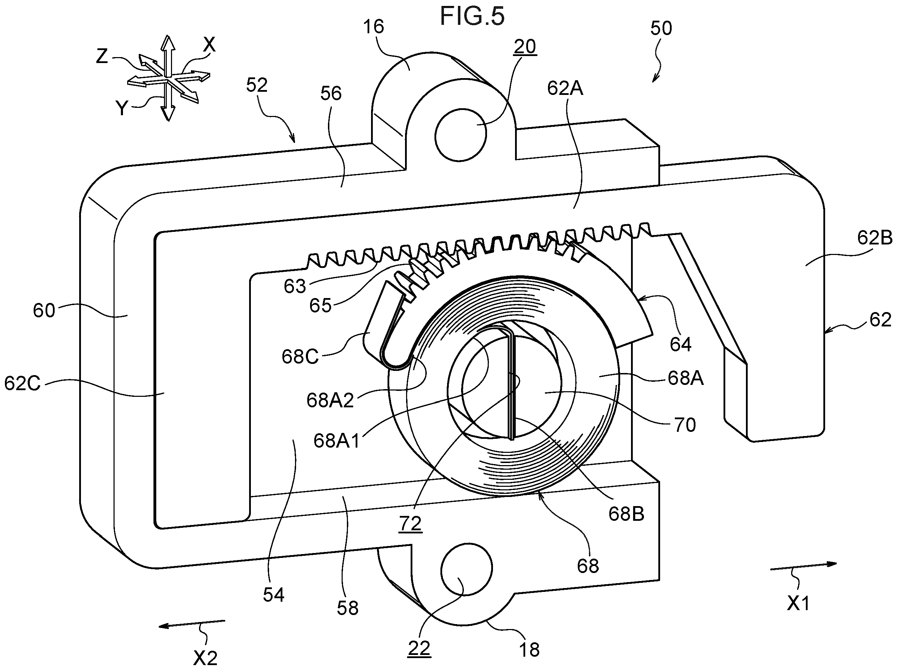

Fig. 5 is a perspective view illustrating a tensioner 50 according to a second exemplary embodiment of the present invention. The tensioner 50 includes a support member 52, a thrust member 62, a swing member 64, and a contact-type flat spiral spring 68. The thrust member 62 is supported so as to be capable of reciprocating movement in a straight line in the first direction (thrust direction) X with respect to the support member 52. The swing member 64 is disposed adjacent to the thrust member 62 in the second direction (spring-adjacency direction) Y that is orthogonal to the first direction X. The swing member 64 has a swing-axis direction running in the third direction (coil axis direction) Z that is orthogonal to both the first direction X and the second direction Y, and is swung on a circular arc trajectory interlocked to the reciprocating movement of the thrust member 62. The flat spiral spring 68 is disposed with a coil axis direction aligned with the third direction Z and concentric to the swing-axis direction of the swing member 64. An inner-end portion 68B of the flat spiral spring 68 is anchored to the support member 52 and an outer-end portion 68C thereof is anchored to the swing member 64. The thrust member 62 is biased in the forward-direction X1 through the swing member 64, and the flat spiral spring 68 is wound-up by movement of the thrust member 62 in the retraction-direction X2.

The support member 52 according to the present exemplary embodiment includes a support member body 54 similar to the support member body 14 according to the first exemplary embodiment, a pair of sidewalls 56, 58 projecting from two width direction (spring-adjacency direction Y) end portions of the support member body 54 toward one side in the coil axis direction Z, and a rear wall 60 projecting toward the one side in the coil axis direction Z from an end portion on the retraction-direction X2 side of the support member body 54. The thrust member 62 is disposed between the pair of sidewalls 56, 58.

The thrust member 62 is, for example, formed from metal, and includes a thrust member body 62A formed in a substantially square rod shape with its length direction running in the reciprocating direction X, a plate-shaped leading-end portion 62B extending from one length direction end portion (an end portion on the forward-direction X1 side) of the thrust member body 62A toward one side in the spring-adjacency direction Y, and a plate-shaped base-end portion 62C extending from another length direction end portion (an end portion on the retraction-direction X2 side) of the thrust member body 62A toward the one side in the spring-adjacency direction Y. The thrust member body 62A is disposed in a state of contact with one sidewall 56 and with the support member body 54. The base-end portion 62C is disposed in a state of contact with the support member body 54, and an end face on the opposite side to the thrust member body 62A side of the base-end portion 62C is disposed in a state of contact with the other sidewall 58. The thrust member 62 is thus restricted from moving in the spring-adjacency direction Y with respect to the support member 52. The leading-end portion 62B side of the thrust member 62 projects beyond the support member 52 in the forward-direction X1. The leading-end portion 62B of the thrust member 62 is configured so as to be pressed against the non-illustrated timing belt or timing chain (belt guide, chain guide, or the like) by the biasing force of the flat spiral spring 68. The swing member 64 is disposed between the thrust member body 62A of the thrust member 62 and the flat spiral spring 68.

The swing member 64 is, for example, formed from a metal formed into a circular arc shape convex on the thrust member body 62A side as viewed along the coil axis direction Z. Plural straight-cut outer teeth 65 are formed on an edge of the swing member 64 on the thrust member body 62A side thereof so as to be arrayed along a circumferential direction of the swing member 64. Plural rack teeth 63 are formed on an edge of the thrust member body 62A on the swing member 64 side thereof so as to be arrayed along the reciprocating direction X and to correspond with the outer teeth 65A. The rack teeth 63 and the outer teeth 65 mesh together. The flat spiral spring 68 is disposed on the opposite side of the swing member 64 to the thrust member body 62A.

The flat spiral spring 68 is configured by a plate-shaped spring material (plate spring material), and includes a spiral portion 68A formed by the plate spring material being wound into a spiral shape, the inner-end portion 68B extending from an inner end 68A1 of the spiral portion 68A toward the center of the spiral portion 68A, and an outer-end portion 68C extending from an outer end 68A2 of the coil portion 34A toward a radial direction outside of the spiral portion 68A. Note that although the spiral portion 68A according to the present exemplary embodiment is configured by the plate spring material wound into multiple turns, there is no limitation thereto, and the number of turns of the plate spring material in the spiral portion 68A may be modified as appropriate.

The flat spiral spring 68 is disposed so as to be interposed between the other sidewall 58 and the swing member 64 in an orientation in which the plate thickness direction of the support member body 54 is aligned with the coil axis direction Z of the spiral portion 68A. The swing member 64 is interposed between the thrust member body 62A and the spiral portion 68A, and is capable of swinging so as to follow an outer circumferential face of the spiral portion 68A. A swing-axis direction of the swing member 64 is aligned with the coil axis direction Z of the spiral portion 68A, and the flat spiral spring 68 is disposed concentrically with the swing-axis direction of the swing member 64.

A circular column shaped inner-end fixing member 70 that projects from the support member body 54 is disposed inside the spiral portion 68A, and the inner-end portion 68B is slotted into a slit-shaped groove 72 formed in the inner-end fixing member 70. The inner-end portion 68B is thereby anchored to the support member 52. The outer-end portion 68C is bent into a substantially U-shape as viewed along the coil axis direction Z, and is hooked onto an end portion on the retraction-direction X2 side of the swing member 64. The outer-end portion 68C is thereby anchored to the swing member 64.

### Operation and Advantageous Effects

Next, explanation follows regarding operation and advantageous effects of the second exemplary embodiment.

In the tensioner 50 configured as described above, the contact-type flat spiral spring 68 biases the thrust member 62 in the forward-direction X1 through the swing member 64, such that the thrust member 62 is moved in the forward-direction X1 with respect to the support member 52. The leading-end portion 62B of the thrust member 62 is thus pressed against the timing belt or timing chain. Tension of the timing belt or timing chain is maintained thereby.

Moreover, when the timing belt or timing chain presses the thrust member 62 in a state in which the tension of the timing belt or timing chain is being maintained, the thrust member 62 is moved in the retraction-direction X2 with respect to the support member 52 and the contact-type flat spiral spring 68 is wound-up through the swing member 64. When this occurs, energy of load input to the thrust member 62 is effectively attenuated by inter-plate friction arising in the contact-type flat spiral spring 68 and loss due to bending stress arising in the flat spiral spring 68. Similarly to in the first exemplary embodiment, this enables micro-vibrations of the timing belt or timing chain to be effectively absorbed (suppressed). This reduces mechanical loss of the engine, and thus improves the fuel efficiency of the engine.

Moreover, in the tensioner 50 too, due to the thrust member 62 being configured supported so as to be straight-line moveable (straight line slidable) with respect to the support member 52, configuration can be simplified compared to a configuration in which a roller carrier with attached pulley is supported so as to be capable of pivoting with respect to a housing. This accordingly enables the tensioner 50 that is capable of improving fuel efficiency to be provided at lower cost. Moreover, the tensioner 50 is configured such that the outer-end portion 68C of the flat spiral spring 68, which is disposed concentrically to the swing axis of the swing member 64 that swings on a circular arc trajectory, is anchored to the swing member 64. This enables stress arising in the flat spiral spring 68 during winding-up and unwinding of the flat spiral spring 68 to be alleviated. Namely, in configurations such as that of the first exemplary embodiment in which the outer-end portion 68C of the flat spiral spring 68 moves in a straight line together with the thrust member 62, a portion of the flat spiral spring 68 on the outer-end portion 68C side thereof (a location close to the outer end 34A2) undergoes repeated shape deformation between a circular arc shape and a straight line shape. This results in a large change in the stress occurring at this portion, however, the present exemplary embodiment is able to avoid this situation. Durability of the flat spiral spring 68 is thus easier to secure as a result.

### Third Exemplary Embodiment

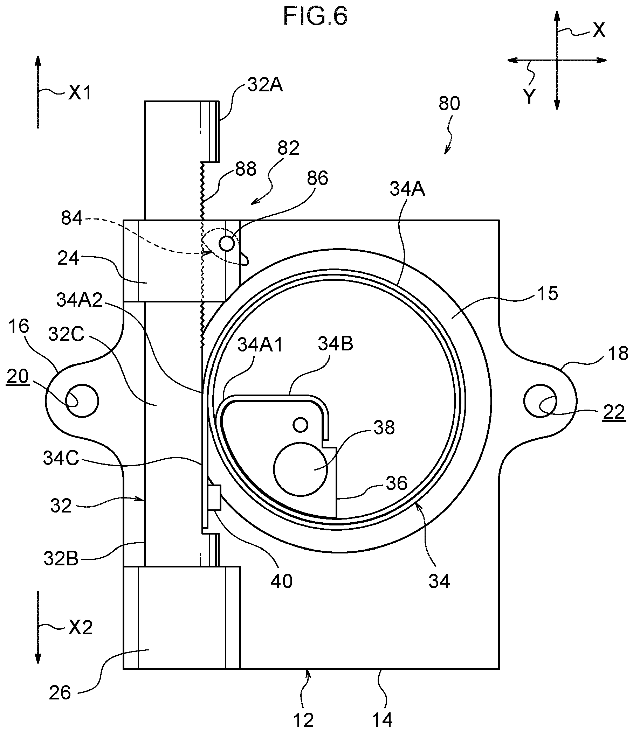

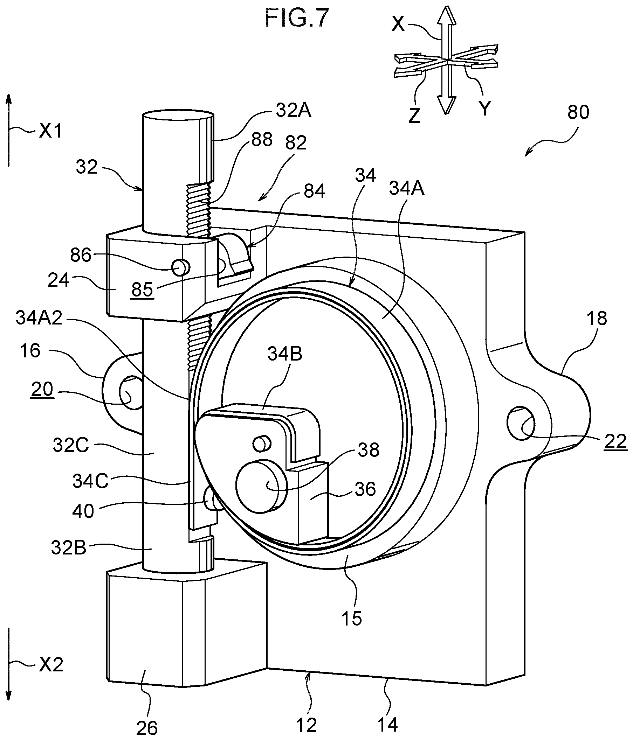

Fig. 6 is a front view illustrating a tensioner 80 according to a third exemplary embodiment of the present invention. Fig. 7 is a perspective view illustrating the tensioner 80. Although the tensioner 80 has the same basic configuration as the tensioner 10 according to the first exemplary embodiment, the tensioner 80 also includes a ratchet mechanism 82, serving as a retraction limiting section. The ratchet mechanism 82 permits movement of the thrust member 32 in the forward-direction X1 with respect to the support member 12, and limits movement of the thrust member 32 in the retraction-direction X2 with respect thereto. The ratchet mechanism 82 includes a ratchet member 84 that is supported by the leading-end side support portion 24.

The ratchet member 84 is disposed on one side in the spring-adjacency direction Y (the side on which the flat spiral spring 34 is disposed) with respect to the length direction intermediate portion 32C of the thrust member 32, and is disposed in a groove 85 (see Fig. 7) formed in the leading-end side support portion 24. The ratchet member 84 is supported on the leading-end side support portion 24 through a support shaft 86 having an axial direction running in the coil axis direction Z, and is capable of rotating about the support shaft 86. The ratchet member 84 is biased toward one side about the axis of the support shaft 86 by a non-illustrated biasing member (resilient member) provided between the ratchet member 84 and the leading-end side support portion 24. An end portion (leading-end portion) of the ratchet member 84 on the length direction intermediate portion 32C side of the thrust member 32 press-contacts the length direction intermediate portion 32C. Plural notches 88 are formed to an end face of the length direction intermediate portion 32C on a ratchet member 84 side thereof so as to be arrayed along the reciprocating direction X. The leading-end portion of the ratchet member 84 engages with the notches 88 so as to limit movement of the thrust member 32 in the retraction-direction X2 with respect to the support member 12. When the thrust member 32 moves (advances) in the forward-direction X1 with respect to the support member 12, the ratchet member 84 rotates toward the other side about the axis of the support shaft 86 while resiliently deforming the biasing member. A configuration is accordingly achieved in which the thrust member 32 is permitted to advance.

Other configuration of the present exemplary embodiment is similar to that of the first exemplary embodiment. The present exemplary embodiment accordingly also obtains similar operation and advantageous effects to the first exemplary embodiment. Moreover, in the present exemplary embodiment the ratchet mechanism 82 permits movement of the thrust member 32 in the forward-direction X1 with respect to the support member 12 and limits movement of the thrust member 32 with respect to the support member 12 in the retraction-direction X2. Accordingly, in cases in which excessive load is input to the thrust member 32 from the timing chain or timing belt, the thrust member 32 can be prevented from retracting too far, thereby enabling the behavior of the timing chain or timing belt to be kept stable at all times.

Note that the retraction limiting section is any section that permits movement of the thrust member 32 in the forward-direction X1 and limits movement of the thrust member 32 in the retraction-direction X2 (restricts movement to a given range), namely is a section capable of preventing the thrust member 32 from retracting excessively. There is accordingly no limitation to the ratchet mechanism 82 described above, and modifications may be implemented as appropriate. For example, a wedge-shaped anchor piece having a width that tapers on progression toward the retraction-direction X2 side may be disposed in a gap between the thrust member 32 and the support member 12 in a configuration in which the notches formed in the thrust member 32 and the anchor piece are caused to engage with each other. Alternatively, for example, the retraction limiting section may be configured employing a register ring, saw-toothed thread, worm gear, or the like.

### Fourth Exemplary Embodiment

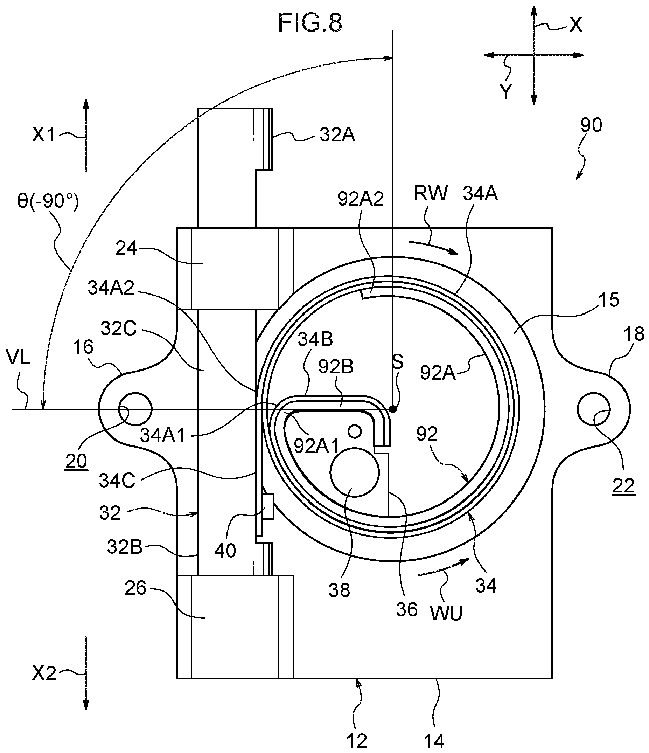

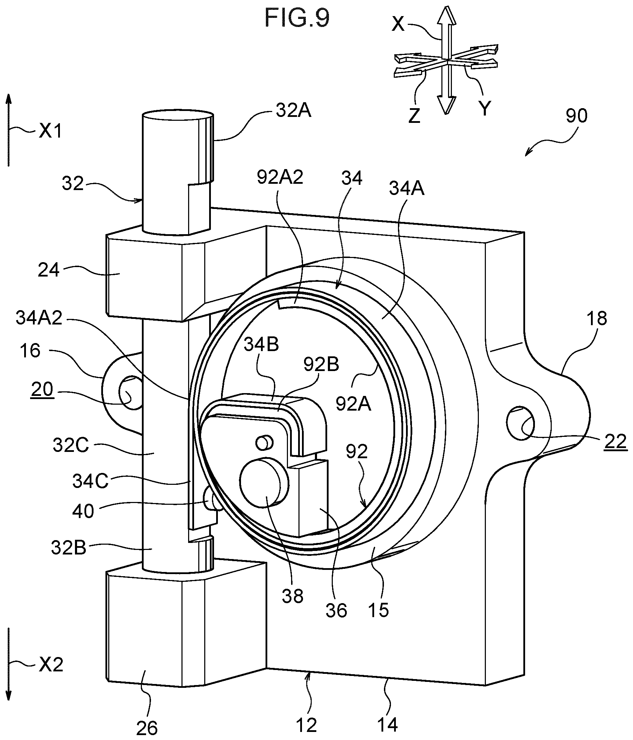

Fig. 8 is a front view illustrating a tensioner 90 according to a fourth exemplary embodiment of the present invention. Fig. 9 is a perspective view illustrating the tensioner 90. Although the tensioner 90 has the same basic configuration as the tensioner 10 according to the first exemplary embodiment, the tensioner 90 is further provided with a back-up spring 92 disposed inside the flat spiral spring 34 and serving as a resistance force imparting section that imparts resistance force to counter radial contraction of the flat spiral spring 34. The back-up spring 92 is configured by a plate-shaped spring material having a thickener plate thickness than the plate-shaped spring material configuring the flat spiral spring 34. Note that the spring material configuring the back-up spring 92 is not limited to being formed from metal, and may be formed from a wear-resistant resin. The back-up spring 92 is formed in a ring shape concentric to the flat spiral spring 34, and includes a ring-shaped portion 92A having an outer circumferential face that contacts an inner circumferential face of the flat spiral spring 34, and an anchor portion 92B extending from one-end portion 92A1 of the ring-shaped portion 92A toward a center S of the ring-shaped portion 92A. The anchor portion 92B is formed in a similar shape to the inner-end portion 34B of the flat spiral spring 34, and is superimposed on the inner-end portion 34B and hooked onto the inner-end fixing member 36. The anchor portion 92B of the back-up spring 92 is thereby anchored to the support member 12.

In the present exemplary embodiment, the ring-shaped portion 92A extends from the anchor portion 92B in the wind-up direction WU of the flat spiral spring 34, and the one-end portion 92A1 of the ring-shaped portion 92A is positioned at an end portion of the ring-shaped portion 92A on a thrust member 32 side thereof. As viewed along the coil axis direction Z (a direction perpendicular to the page in Fig. 8), the one-end portion 92A1 is disposed at a position 0° about the center S with respect to a virtual straight line VL extending along the spring-adjacency direction Y from the center S of the ring-shaped portion 92A toward the thrust member 32. An other-end portion 92A2 of the ring-shaped portion 92A is disposed so as to be separated from the one-end portion 92A1 in the circumferential direction of the ring-shaped portion 92A, such that the ring-shaped portion 92A has a substantially C shape as viewed along the coil axis direction Z. Note that as viewed along the coil axis direction Z, the one-end portion 92A1 of the ring-shaped portion 92A is preferably disposed in a range spanning from the position at 0° about the center S with respect to the virtual straight line VL to a position 90° in the unwind direction RW about the center S with respect to the virtual straight line VL (a range of from -90° to 0°, as indicated by θ in Fig. 8).

Other configuration of the present exemplary embodiment is similar to that of the first exemplary embodiment. The present exemplary embodiment accordingly also obtains similar operation and advantageous effects to the first exemplary embodiment. Moreover, in the present exemplary embodiment the back-up spring 92 configured by a plate-shaped spring material, the outer circumferential face of the ring-shaped portion 92A, which is formed in a ring shape concentrically with the flat spiral spring 34, contacts the inner circumferential face of the flat spiral spring 34, and the anchor portion 92B, which extends from the one-end portion of the ring-shaped portion 92A toward the center S of the ring-shaped portion 92A, is anchored to the support member 12. Accordingly, when the flat spiral spring 34 is being wound-up, the ring-shaped portion 92A of the back-up spring 92 imparts resistance force acting to counter radial contraction of the flat spiral spring 34 (a biasing force toward the radial direction outside of the flat spiral spring 34). This enables an increase to be achieved in the inter-plate friction arising in the flat spiral spring 34 at winding-up of the flat spiral spring 34, thereby enabling an improvement to be achieved in the attenuation effect (described above hysteresis characteristics).

Moreover, in the present exemplary embodiment, the back-up spring 92 configured from a plate-shaped spring material serves as a resistance force imparting section, enabling the resistance force imparting section to be configured simply. Moreover, since energy of load input to the thrust member 32 is also attenuated by friction arising between the flat spiral spring 34 and the ring-shaped portion 92A when the flat spiral spring 34 is being wound-up, and by loss due to bending stress arising in the back-up spring 92, the hysteresis characteristics can be effectively improved. Note that a configuration may be adopted in which the ratchet mechanism 82 according to the third exemplary embodiment is applied to the tensioner 90 according to the fourth exemplary embodiment.

Moreover, in the present exemplary embodiment, as viewed along the coil axis direction Z, the one-end portion 92A1 of the ring-shaped portion 92A is disposed at the position at 0° about the center S of the ring-shaped portion 92A with respect to the virtual straight line VL extending along the spring-adjacency direction Y from the center S of the ring-shaped portion 92A toward the thrust member 32 side. Namely, a location at the one-end portion 92A1 side of the ring-shaped portion 92A is disposed close to the thrust member 32. Note that in cases in which the location at the one-end portion 92A1 side of the ring-shaped portion 92A is disposed away from the thrust member 32, load applied to the outer-end portion 34C of the flat spiral spring 34 by movement of the thrust member 32 in the retraction-direction X2 would act as bending load on the flat spiral spring 34 and on the back-up spring 92. This would be detrimental to the conversion efficiency into load to wind-up the flat spiral spring 34. This would result in a drop in inter-plate friction arising in the flat spiral spring 34 and a drop in the hysteresis characteristics. By contrast thereto, in cases in which the location at the one-end portion 92A1 side of the ring-shaped portion 92A is disposed close to the thrust member 32 as in the present exemplary embodiment, the load applied to the outer-end portion 34C of the flat spiral spring 34 by movement of the thrust member 32 in the retraction-direction X2 is input as rotational torque to the flat spiral spring 34 and to the back-up spring 92 so as to make any difference in radius of curvature small over the entire range of the coil portion 34A and the ring-shaped portion 92A. This facilitates radial contraction of the coil portion 34A and the ring-shaped portion 92A about a support point at the anchor portion 92B while maintaining the true circular shapes thereof. As a result, the load accordingly does not tend to act as bending load on the flat spiral spring 34 and the back-up spring 92, and is readily converted into load to wind-up the flat spiral spring 34. Inter-plate friction arising in the flat spiral spring 34 increases as a result, improving the hysteresis characteristics.

### Fifth Exemplary Embodiment

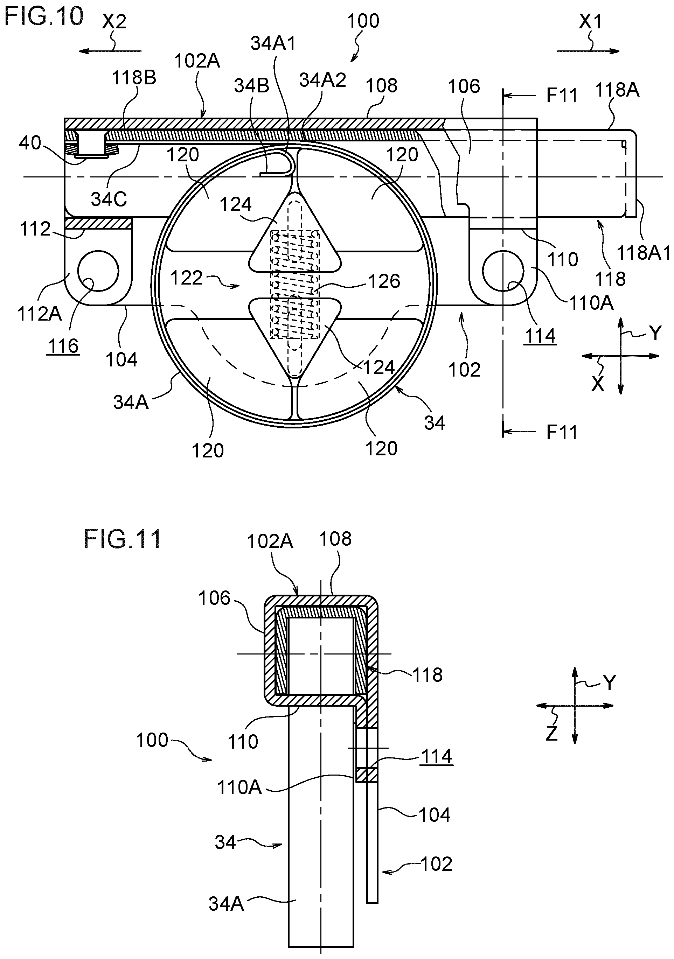

Fig. 10 is a partial cross-section illustrating a tensioner 100 according to a fifth exemplary embodiment of the present invention from a front side. Fig. 11 is a partial cross-section illustrating the tensioner 100 in a state sectioned along the line F11-F11 in Fig. 10. The tensioner 100 includes a support member 102, a thrust member 118, and a flat spiral spring 34, and has the same basic configuration as the tensioner 10 according to the first exemplary embodiment. However, the configuration of the support member 102 and the thrust member 118 of the tensioner 100 differ from the configuration of the support member 12 and the thrust member 32 according to the first exemplary embodiment.

The support member 102 is formed by press-molding sheet metal, and includes a plate shaped support member body 104 having a plate thickness direction in the coil axis direction Z. The support member body 104 is formed in a substantially elongated rectangular shape with its length direction extending in the reciprocating direction X as viewed along the coil axis direction Z. One end-side of the support member body 104 in a width direction (spring-adjacency direction Y) is bent toward the flat spiral spring 34 so as to form a thrust member support section 102A having a substantially U-shaped profile (substantially C-shaped profile). The thrust member support section 102A projects out from one width direction end portion of the support member body 104 (an end portion on the upper side in Fig. 10 and Fig. 11) toward one side in the coil axis direction Z (the side on which the flat spiral spring 34 and the thrust member 118 are disposed). The thrust member support section 102A includes an opposing wall 106 that opposes the support member body 104 across a gap, and an upper wall 108 linking one width direction end portion of the support member body 104 and one width direction end portion of the opposing wall 106 (end portions on the upper side in Fig. 10 and Fig. 11) together in the coil axis direction Z. Moreover, the thrust member support section 102A further includes a pair of retention tabs 110, 112 extending from both reciprocating direction X end portions of another width direction end portion of the opposing wall 106 toward the support member body 104. Leading-end portions 110A, 112A of the retention tabs 110, 112 are bent in the opposite direction to the upper wall 108 side, and are superimposed on the support member body 104. Through holes 114, 116 are respectively formed through the leading-end portions 110A, 112A and the support member body 104, so as to penetrate through both the support member body 104 and the leading-end portions 110A, 112A. Bolts or the like that have been inserted through the through holes 114, 116 are employed to achieve a configuration in which the support member 102 is fixed to the cylinder block of a non-illustrated engine.

The thrust member 118 is formed by press-molding sheet metal, and is formed with an elongated profile having its length running in the reciprocating direction X. The thrust member 118 has an open cross-section profile open on the flat spiral spring 34 side as viewed along the reciprocating direction X, and is disposed between the support member body 104 and the opposing wall 106. The thrust member 118 is restricted from moving in the spring-adjacency direction Y by the pair of retention tabs 110, 112 and the upper wall 108. However, the thrust member 118 is supported so as to be capable of reciprocating movement in a straight line with respect to the support member 102 in the reciprocating direction X. A leading-end portion 118A of the thrust member 118 projects out beyond the support member 102 in the forward-direction X1. A leading end wall 118A1 is provided at a leading end of the thrust member 118 so as to have its plate thickness direction in the reciprocating direction X. The leading end wall 118A1 is configured so as to be pressed against the non-illustrated timing belt or timing chain (belt guide, chain guide, or the like). Part of the flat spiral spring 34, including the outer-end portion 34C, is disposed at the inside of the thrust member 118. A leading-end portion (an end portion on the retraction-direction X2 side) of the outer-end portion 34C of the flat spiral spring 34 is anchored (fixed in this example) to a base-end portion 118B of the thrust member 118 by the anchor member 40 (for example a rivet or screw).

In the tensioner 100, plural press-contact members 120 (four in this example) and a biasing portion 122 are disposed at the inside of the coil portion 34A of the flat spiral spring 34. The biasing portion 122 is configured by a pair of wedge shaped members 124 and a compression coil spring 126. The plural press-contact members 120 and the biasing portion 122 configure a resistance force imparting section. The plural press-contact members 120 are arrayed along the circumferential direction of the flat spiral spring 34. The press-contact members 120 are formed with substantially fan-shaped block profiles as viewed along the coil axis direction Z, and circular arc shaped faces of the press-contact members 120 contact the inner circumferential face of the coil portion 34A as viewed along the coil axis direction Z. For example, each of the press-contact members 120 may include a non-illustrated protrusion that protrudes toward the support member body 104. These protrusions are each fitted into a non-illustrated groove formed in the support member body 104 such that the press-contact members 120 are each supported so as to be capable of moving with respect to the support member body 104 in respective radial directions of the flat spiral spring 34 (radial directions of the coil portion 34A). Note that in the present exemplary embodiment, although the inner-end portion 34B of the flat spiral spring 34 is fixed to one out of the plural press-contact members 120 so as to be anchored to the support member 102 through this one press-contact member 120, there is no limitation thereto. A configuration may be adopted in which the inner-end portion 34B of the flat spiral spring 34 is anchored directly to the support member 102.

Each of the pair of wedge shaped members 124 is formed with a substantially triangular shaped block profile as viewed along the coil axis direction Z. The pair of wedge shaped members 124 are arrayed along a direction of a diameter of the coil portion 34A (in the spring-adjacency direction Y in this example). The wedge shaped members 124 are each slotted between an adjacent pair of the press-contact members 120. For example, each of the wedge shaped members 124 may include a non-illustrated protrusion that protrudes toward the support member body 104. These protrusions are each fitted into a non-illustrated groove formed in the support member body 104 such that the wedge shaped members 124 are supported so as to be capable of moving with respect to the support member body 104 in the direction of a diameter of the flat spiral spring 34 (in the spring-adjacency direction Y in this example).

The compression coil spring 126 is disposed between the pair of wedge shaped members 124. The two axial direction end sides of the compression coil spring 126 are inserted into holes (not appended reference numerals) respectively formed in the pair of wedge shaped members 124. The compression coil spring 126 biases the pair of wedge shaped members 124 in directions away from each other. The plural press-contact members 120 are thereby biased toward the radial direction outside of the flat spiral spring 34, such that the plural press-contact members 120 are pressed against the inner circumferential face of the flat spiral spring 34.

Other configuration of the present exemplary embodiment is similar to that of the first exemplary embodiment. The present exemplary embodiment accordingly also has the same basic operation and obtains similar advantageous effects as those of the first exemplary embodiment. Moreover, when the flat spiral spring 34 is being wound-up in the present exemplary embodiment, the plural press-contact members 120 arrayed along the circumferential direction of the flat spiral spring 34 impart resistance force to counter radial contraction of the flat spiral spring 34 while receiving biasing force from the compression coil spring 126. This enables the inter-plate friction arising in the flat spiral spring 34 to be increased. Moreover, due to adopting the configuration in which the plural press-contact members 120 arrayed around the circumferential direction of the flat spiral spring 34 are pressed against the inner circumferential face of the flat spiral spring 34, a press-contact force is easily caused to act uniformly on all locations along the circumferential direction of the flat spiral spring 34. Moreover, friction arising between the inner circumferential face of the flat spiral spring 34 and the plural press-contact members 120 when the flat spiral spring 34 is being wound-up, enables further improvement to the hysteresis characteristics. Moreover, in the present exemplary embodiment, part of the flat spiral spring 34, including the outer-end portion 34C, is disposed at the inside of the thrust member 118 that has an open cross-section profile open on the flat spiral spring 34 side as viewed along the reciprocating direction X. This enables a more compact tensioner 100 to be achieved. Moreover, in the present exemplary embodiment, since the support member 102 and the thrust member 118 are each components press-molded from sheet metal, manufacturing cycle time can be reduced, and a reduction in manufacturing costs is facilitated, in comparison to cases in which manufacture of the support member 102 and the thrust member 118 involves machining, forging, or the like. A reduction in weight of the support member 102 and the thrust member 118 is also facilitated.

### Sixth Exemplary Embodiment

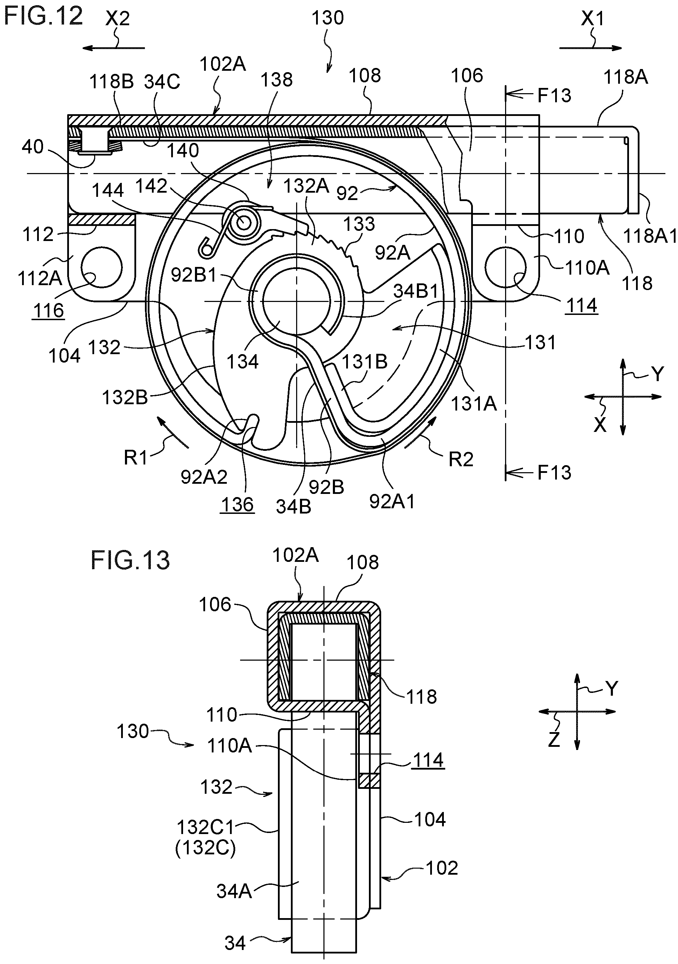

Fig. 12 is a partial cross-section illustrating a tensioner 130 according to a sixth exemplary embodiment of the present invention, as viewed from the front side. Fig. 13 is a partial cross-section illustrating the tensioner 130 in a state sectioned along line F13-F13 in Fig. 12. The tensioner 130 includes a flat spiral spring 34, a support member 102, and a thrust member 118 similar to the flat spiral spring 34, the support member 102, and the thrust member 118 according to the fifth exemplary embodiment. However, the tensioner 130 lacks the plural press-contact members 120 or the biasing portion 122 according to the fifth exemplary embodiment, but is instead provided with a back-up spring 92, serving as a resistance force imparting section. The back-up spring 92 has the same basic configuration as the back-up spring 92 according to the fourth exemplary embodiment, including the ring-shaped portion 92A and the anchor portion 92B.

The tensioner 130 includes a radial-contraction restriction member 132 and a rotation ratchet mechanism 138. The radial-contraction restriction member 132 is disposed at the inside of the ring-shaped portion 92A as viewed along the coil axis direction Z, is supported so as to be capable of rotating with respect to the support member 102 about an axis running in the coil axis direction Z, and is engaged with the other-end portion 92A2 of the ring-shaped portion 92A. The rotation ratchet mechanism 138 serves as a rotation limiting section that permits the radial-contraction restriction member 132 to rotate in one direction (the arrow R1 direction in Fig. 12) about the aforementioned axis with respect to the support member 102 interlocked to radial enlargement of the ring-shaped portion 92A, and limits the radial-contraction restriction member 132 from rotating in the other direction (the arrow R2 direction in Fig. 12) about the aforementioned axis with respect to the support member 102 interlocked to radial contraction of the ring-shaped portion 92A. Detailed explanation follows regarding this configuration.

In the present exemplary embodiment, a leading-end portion of the anchor portion 92B of the back-up spring 92 configures a bent portion 92B1 bent into the shape of a ring concentric to the flat spiral spring 34. A support shaft 134 projecting from the support member body 104 in a circular column shaped is fitted inside the bent portion 92B1. The support shaft 134 is formed in a shape concentric to the coil portion 34A of the flat spiral spring 34 and to the ring-shaped portion 92A of the back-up spring 92.

Moreover, in the present exemplary embodiment, the inner-end portion 34B of the flat spiral spring 34 is formed in a similar shape to the anchor portion 92B of the back-up spring 92, and a bent portion 34B1 bent into a ring shape concentric to the ring-shaped portion 92A of the back-up spring 92 is formed at a leading-end portion of the inner-end portion 34B. The inner-end portion 34B is superimposed on the anchor portion 92B, and the bent portion 34B1 is wound onto an outer circumferential face of the bent portion 92B1. The inner-end portion 34B of the flat spiral spring 34 is thereby anchored to the support member 102.

The other-end portion 92A2 of the ring-shaped portion 92A of the back-up spring 92 is engaged with the radial-contraction restriction member 132. The radial-contraction restriction member 132 is disposed at the inside of the coil portion 34A of the flat spiral spring 34 and the ring-shaped portion 92A. The radial-contraction restriction member 132 is, for example, formed from metal, and includes a shaft bearing portion 132A formed with a substantially ring shaped profile as viewed along coil axis direction Z. The shaft bearing portion 132A is disposed between the support member body 104 and the respective bent portions 34B1, 92B1 of the flat spiral spring 34 and the back-up spring 92. The support shaft 134 is rotatably fitted inside the shaft bearing portion 132A. The radial-contraction restriction member 132 is thus supported so as to be capable of rotating about the axis of the support shaft 134 (about an axis running in the coil axis direction Z) with respect to the support member 102.

Another end side support portion 132B extends from a portion of the outer periphery of the shaft bearing portion 132A toward the other-end portion 92A2 of the ring-shaped portion 92A. The other-end portion 92A2 of the ring-shaped portion 92A is bent toward the center of the ring-shaped portion 92A, and is fitted inside a notch 136 formed in a leading-end portion of the other side support portion 132B. The other-end portion 92A2 of the ring-shaped portion 92A is thus supported by (coupled to) the radial-contraction restriction member 132. A one-end side support member 131 is disposed between the shaft bearing portion 132A and the one-end side of the ring-shaped portion 92A. The one-end side support member 131 is, for example, formed from sheet metal, and is fixed to the support member body 104 by means such as welding or the like. The one-end side support member 131 is formed with a substantially fan shaped profile when viewed along the coil axis direction Z, with a dimension in a circumferential direction of the ring-shaped portion 92A that increases on progression toward the one-end side of the ring-shaped portion 92A.

An end portion on the ring-shaped portion 92A side of the one-end side support member 131 is formed with a circular arc shaped wall 131A extending toward the opposite side to the support member body 104 (out of the page in Fig. 12). The circular arc shaped wall 131A is curved to a profile concentric to the ring-shaped portion 92A, and contacts the one-end side of the ring-shaped portion 92A from the circumferential inside of the ring-shaped portion 92A. An end portion of the one-end side support member 131 on one side (the arrow R1 direction side in Fig. 12) in the circumferential direction of the ring-shaped portion 92A is formed with a radial direction wall 131B extending toward the opposite side to the support member body 104 side (out of the page in Fig. 12). The radial direction wall 131B extends in a radial direction of the ring-shaped portion 92A, is integrally linked to the circular arc shaped wall 131A, and contacts a base-end portion of the anchor portion 92B from one side in the circumferential direction of the ring-shaped portion 92A. The one-end side of the ring-shaped portion 92A and the anchor portion 92B are supported by the one-end side support member 131 configured as described above.

The rotation ratchet mechanism 138 includes a ratchet member 140 disposed on the opposite side of shaft bearing portion 132A to the one-end side support member 131. The ratchet member 140 is formed with an elongated profile having its length running in the reciprocating direction X. A base-end portion (an end portion on the retraction-direction X2 side) of the ratchet member 140 is pierced by a support shaft 142 projecting from the support member body 104. The support shaft 142 is formed in a circular column shape with its axial direction running in the coil axis direction Z, and the ratchet member 140 is capable of rotating about the support shaft 142 with respect to the support member 102. The ratchet member 140 is biased in one direction about the axis of the support shaft 142 by a torsion coil spring (biasing member) 144 provided spanning between the support member body 104 and the ratchet member 140. A leading-end portion (an end portion on the forward-direction X1 side) of the ratchet member 140 press-contacts an outer circumferential face of the shaft bearing portion 132A.

Plural ratchet teeth 133 are formed on the outer circumferential face of the shaft bearing portion 132A so as to be arrayed along the circumferential direction of the shaft bearing portion 132A. Rotation of the radial-contraction restriction member 132 in the other direction (arrow R2 direction in Fig. 12) about the axis of the support shaft 134 with respect to the support member 102 is limited by a leading-end portion of the ratchet member 140 engaging with the ratchet teeth 133. In the ratchet member 140, when the radial-contraction restriction member 132 is rotated in the one direction (arrow R1 direction in Fig. 12) about the axis of the support shaft 134 with respect to the support member 102, the torsion coil spring 144 is rotated in the other direction about the axis of the support shaft 142 while being resiliently deformed. This accordingly achieves a configuration in which the radial-contraction restriction member 132 is permitted to rotate in the one direction about the aforementioned axis.

Note that although the rotation ratchet mechanism 138 (rotation limiting section), configured by the plural ratchet teeth 133 formed on the radial-contraction restriction member 132 and the ratchet member 140 and so on, is disposed at the inside of the flat spiral spring 34 in the present exemplary embodiment, there is no limitation thereto. For example, as a rotation limiting section, plural ratchet teeth may be formed to part of a radial-contraction restriction member 132 that extends to the outside of the flat spiral spring 34, in a configuration in which a ratchet member disposed at the outside of the flat spiral spring 34 engages with these plural ratchet teeth.

Other configuration of the present exemplary embodiment is similar to that of the fifth exemplary embodiment. In the present exemplary embodiment, the ring-shaped portion 92A of the back-up spring 92 imparts resistance force to counter radial contraction of the flat spiral spring 34 when the flat spiral spring 34 is being wound-up, and so the present exemplary embodiment also has the same basic operation and obtains similar advantageous effects as the fifth exemplary embodiment. Moreover, in the present exemplary embodiment the resistance force imparting section is configured by the back-up spring 92, enabling the configuration of the resistance force imparting section to be simplified.

Moreover, in the present exemplary embodiment, when the thrust member 118 moves in the forward-direction X1 with respect to the support member 102 so as to radially enlarge the coil portion 34A of the flat spiral spring 34 and the ring-shaped portion 92A of the back-up spring 92, interlocked to the radial enlargement of the ring-shaped portion, the radial-contraction restriction member 132 is rotated with respect to the support member 102 in the one direction (arrow R1 direction in Fig. 12) about an axis running in the coil axis direction Z. When this occurs, this rotation of the radial-contraction restriction member 132 in the one direction about the aforementioned axis is permitted by the rotation ratchet mechanism 138.

On the other hand, when the timing belt or timing chain presses the thrust member 118 such that the thrust member 118 attempts to move with respect to the support member 102 in the retraction-direction X2, the coil portion 34A of the flat spiral spring 34 and the ring-shaped portion 92A of the back-up spring 92 attempt to undergo radial contraction. When this occurs, although, interlocked to the radial contraction of the ring-shaped portion 92A, the radial-contraction restriction member 132 attempts to rotate in the other direction (the arrow R2 direction in Fig. 12) about the aforementioned axis with respect to the support member 102, this rotation of the radial-contraction restriction member 132 in the other direction about the axis is restricted by the rotation ratchet mechanism 138. When the thrust member 118 attempts to move in the retraction-direction X2 in a state in which radial contraction of the ring-shaped portion 92A is restricted, the flat spiral spring 34 is wound-up in a state in which radial contraction of the inner circumferential face of the flat spiral spring 34 is restricted by the ring-shaped portion 92A. This increases inter-plate friction arising in the flat spiral spring 34. The retraction of the thrust member 118 with respect to the support member 102 is suppressed (limited) as a result, thereby further improving the effect of suppressing micro-vibrations of the timing chain or timing belt.

### Seventh Exemplary Embodiment

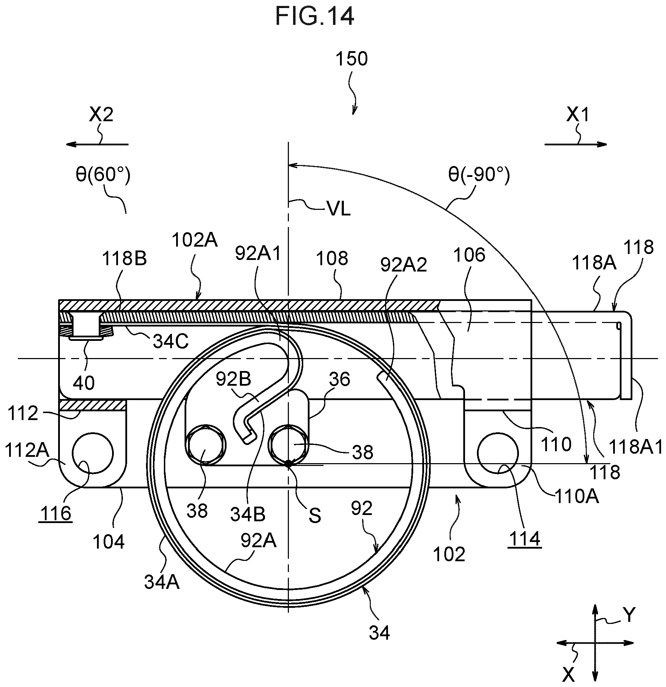

Fig. 14 is a partial cross-section illustrating a tensioner 150 according to a seventh exemplary embodiment of the present invention, as viewed from the front side. The tensioner 150 is provided with a flat spiral spring 34, a support member 102, and a thrust member 118 similar to the flat spiral spring 34, the support member 102, and the thrust member 118 according to the fifth exemplary embodiment. However, the tensioner 150 lacks the plural press-contact members 120 and the biasing portion 122 according to the fifth exemplary embodiment, and is instead provided with a back-up spring 92 serving as a resistance force imparting section.

The back-up spring 92 has the same basic configuration as the back-up spring 92 according to the fourth exemplary embodiment, including the ring-shaped portion 92A and the anchor portion 92B. The anchor portion 92B of the back-up spring 92 and the inner-end portion 34B of the flat spiral spring 34 are anchored to the support member 102 using an inner-end fixing member 36 similar to the inner-end fixing member 36 according to the first exemplary embodiment. However, in the present exemplary embodiment, the anchor portion 92B and the inner-end portion 34B are fitted into a groove (not appended a reference numeral) formed in the inner-end fixing member 36. Note that the reference numerals of the inner end 34A1 and outer end 34A2 of the coil portion 34A are not illustrated in Fig. 14.

In the present exemplary embodiment, similarly to in the fourth exemplary embodiment, as viewed along the coil axis direction Z (a direction perpendicular to the page in Fig. 14), the one-end portion 92A1 of the ring-shaped portion 92A is disposed at a position 0° around the center S with respect to a virtual straight line VL extending in the spring-adjacency direction Y from the center S of the ring-shaped portion 92A toward the thrust member 32. The other-end portion 92A2 of the ring-shaped portion 92A is disposed so as to be separated from the one-end portion 92A1 in the circumferential direction of the ring-shaped portion 92A, such that the ring-shaped portion 92A has a substantially C shape as viewed along the coil axis direction Z. Note that as viewed along the coil axis direction Z, the one-end portion 92A1 of the ring-shaped portion 92A is preferably disposed in a range spanning from the position at 0° about the center S with respect to the virtual straight line VL to a position 90° from the virtual straight line VL in the unwind direction RW (a range of from -90° to 0°, as indicated by θ in Fig. 14).

Other configuration of the present exemplary embodiment is similar to that of the fifth exemplary embodiment. The present exemplary embodiment accordingly also obtains similar basic operation and advantageous effects to those of the fifth exemplary embodiment. Moreover, in the present exemplary embodiment, similarly to in the fourth exemplary embodiment, load applied to the outer-end portion 34C of the flat spiral spring 34 when the thrust member 118 moves in the retraction-direction X2 is not liable to act as bending load on the flat spiral spring 34 and the back-up spring 92, thus facilitating conversion into load to wind-up the flat spiral spring 34. This increases the inter-plate friction arising in the flat spiral spring 34 as a result, thus improving the hysteresis characteristics.

### Eighth Exemplary Embodiment

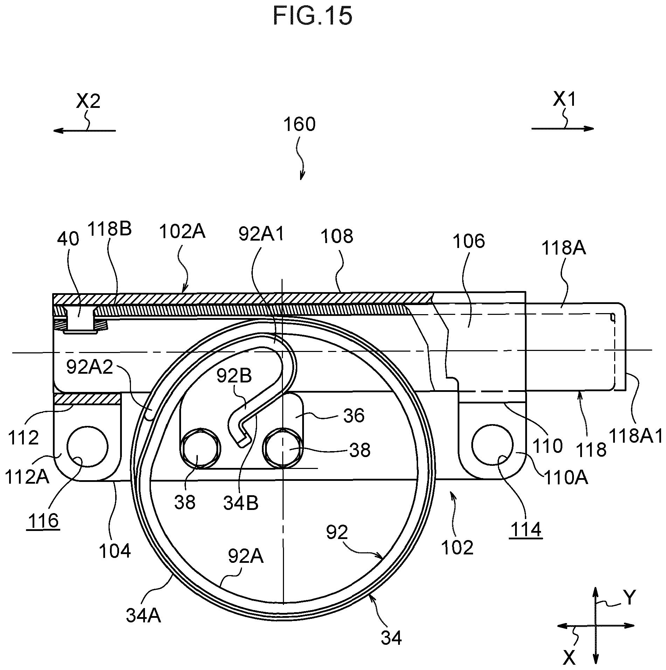

Fig. 15 is a partial cross-section illustrating a tensioner 160 according to an eighth exemplary embodiment of the present invention, as viewed from the front side. Although the tensioner 160 has the same basic configuration as the tensioner 150 according to the seventh exemplary embodiment, the configuration of the back-up spring 92 is slightly modified. The ring-shaped portion 92A of the back-up spring 92 according to the present exemplary embodiment is formed by winding a plate-shaped spring material for at least 1.0 full turns. Specifically, the other-end portion 92A2 of the ring-shaped portion 92A is disposed at the radial direction outside of the ring-shaped portion 92A with respect to a location on the one-end portion 92A1 side of the ring-shaped portion 92A.

Other configuration of the present exemplary embodiment is similar to that of the seventh exemplary embodiment. The present exemplary embodiment accordingly also has the same basic operation and obtains similar advantageous effects as the seventh exemplary embodiment. Moreover, in the present exemplary embodiment the ring-shaped portion 92A of the back-up spring 92 is formed by winding the plate-shaped spring material for at least 1.0 full turns. Accordingly, the other-end portion 92A2 side (free end side) of the ring-shaped portion 92A is prevented from deforming toward the center S side of the ring-shaped portion 92A further than the one-end portion 92A1 side (anchored-end side) of the ring-shaped portion 92A when the flat spiral spring 34 is being wound-up. This makes it easier to achieve uniform radial contraction at all circumferential direction locations of the ring-shaped portion 92A. As a result, the resistance force imparted from the ring-shaped portion 92A to counter radial contraction of the flat spiral spring 34 is readily imparted uniformly at all circumferential direction locations of the flat spiral spring 34.

### Ninth Exemplary Embodiment

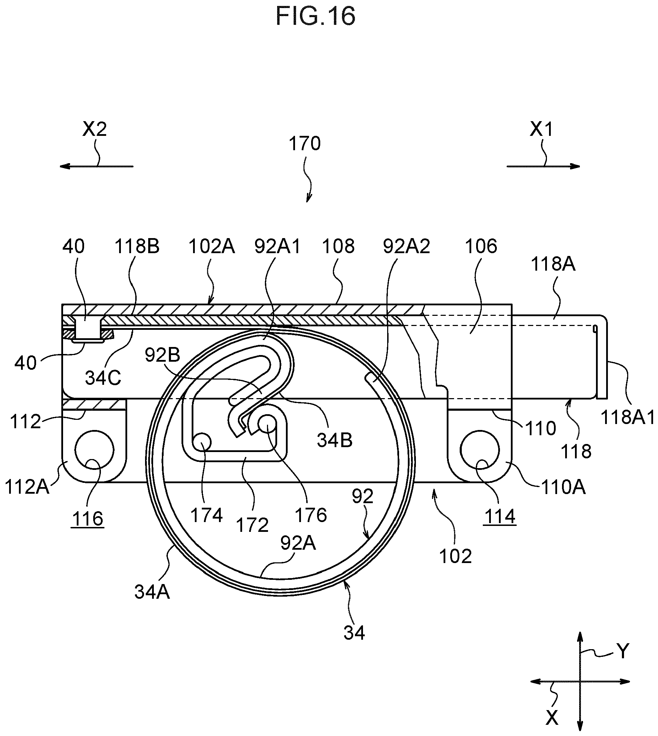

Fig. 16 is a partial cross-section illustrating a tensioner 170 according to a ninth exemplary embodiment of the present invention, as viewed from the front side. Although the tensioner 170 has the same basic configuration as the tensioner 150 according to the seventh exemplary embodiment, an inner-end fixing member 172 made from sheet metal is provided instead of the inner-end fixing member 36 according to the seventh exemplary embodiment. The inner-end fixing member 172 is formed by bending (press-molding) an elongated strip of sheet metal into a substantially C-shape, and is disposed at the radial direction inside of the back-up spring 92. The inner-end fixing member 172 is configured including a lower edge 172A, a one-side edge portion 172B, a upper edge 172C, an oblique edge portion 172D, an other-side edge portion 172E, and an anchor edge portion 172F. The lower edge 172A extends along the reciprocating direction X. The one-side edge portion 172B extends from an end portion on the retraction-direction X2 side of the lower edge 172A toward one side in the spring-adjacency direction Y. The upper edge 172C extends from an end portion on the opposite side of the one-side edge portion 172B to the lower edge 172A, and extends obliquely both toward the forward-direction X1 side toward the one side in the spring-adjacency direction Y. The oblique edge portion 172D extends from an end portion of the upper edge 172C on the opposite side to the one-side edge portion 172B, and extends obliquely both toward the other side in the spring-adjacency direction Y and toward the retraction-direction X2 side. The other-side edge portion 172E extends from an end portion on the forward-direction X1 side of the lower edge 172A, and extends toward the one side in the spring-adjacency direction Y. The anchor edge portion 172F extends from an end portion on the opposite side of the other-side edge portion 172E to the lower edge 172A, and extends toward the retraction-direction X2 side. The anchor edge portion 172F is curved with a convex circular arc profile on the one side in the spring-adjacency direction.

The inner-end fixing member 172 configured as described above is supported by the support member 102 using a pair of pin members 174, 176 projecting from the support member body 104. The pair of pin members 174, 176 are disposed at the radial direction inside of the back-up spring 92 so as to have an axial direction running in the coil axis direction Z. The pin members 174, 176 are fixed to the support member body 104 by means such as swaging, welding, or the like. One of the pin members, namely the pin member 174, contacts a bent portion between the lower edge 172A and the one-side edge portion 172B from the inside of the inner-end fixing member 172. The anchor edge portion 172F of the inner-end fixing member 172 is wrapped around the other of the pin members, namely the pin member 176. The anchor portion 92B of the back-up spring 92 and the inner-end portion 34B of the flat spiral spring 34 are nipped between the oblique edge portion 172D and the anchor edge portion 172F of the inner-end fixing member 172. The anchor portion 92B and the inner-end portion 34B are thus anchored to the support member 102 through the inner-end fixing member 172.

Other configuration of the present exemplary embodiment is similar to that of the seventh exemplary embodiment. The present exemplary embodiment accordingly also has the same basic operation and obtains similar advantageous effects as the seventh exemplary embodiment. Moreover, in the present exemplary embodiment, since the inner-end fixing member 172 is a component press-molded from sheet metal, manufacturing cycle time can be reduced, and a reduction in manufacturing costs is facilitated, in comparison to cases in which manufacture of the inner-end fixing member 172 involves machining, forging, or the like. A reduction in weight of the inner-end fixing member 172 is also facilitated.

### Tenth Exemplary Embodiment

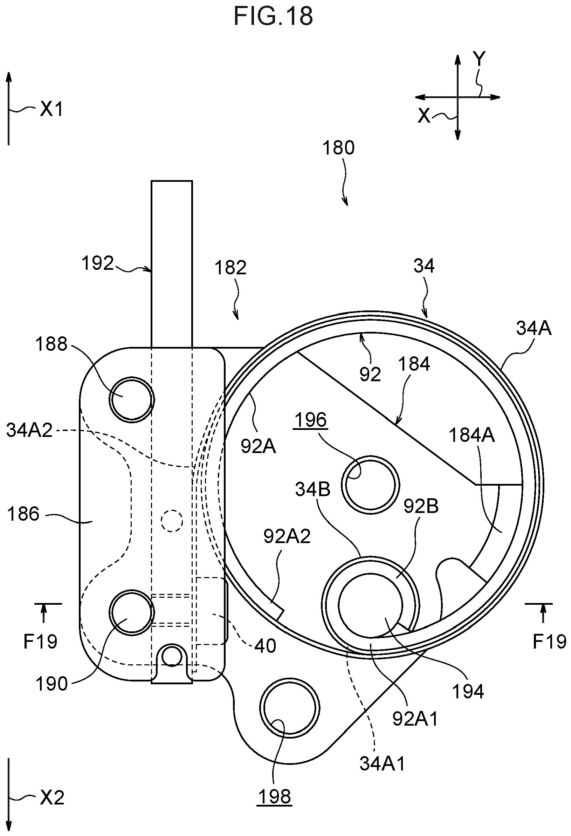

Fig. 18 is a partial cross-section illustrating a tensioner 180 according to a tenth exemplary embodiment of the present invention, as viewed from the front side. Although the tensioner 180 is configured similarly to the tensioner 90 according to the fourth exemplary embodiment, a support member 182 and a thrust member 192 made from sheet metal are provided instead of the support member 12 and the thrust member 32 according to the fourth exemplary embodiment. The support member 182 includes a plate shaped support member body 184 having a plate thickness direction in the coil axis direction Z, a plate shaped retention plate 186 opposing the support member body 184 in the coil axis direction Z, and a pair of pin members 188, 190 linking the support member body 184 and the retention plate 186 together in the coil axis direction Z. The support member body 184 and the retention plate 186 are each components press-molded from sheet metal, and the pin members 188, 190 are configured from metal rod members.

The retention plate 186 is set with a smaller spring-adjacency direction Y dimension than the support member body 184, and is disposed on the opposite side of the thrust member 192 to the support member body 184. The pair of pin members 188, 190 are formed in circular column shapes having axial directions running in the coil axis direction Z. The pin members 188, 190 are disposed on the opposite side of the thrust member 192 to the flat spiral spring 34, and are separated from each other in the reciprocating direction X. End portions at one axial direction side of the pin members 188, 190 are fitted into corresponding circular through holes (not appended reference numerals) formed in the support member body 184, and end portions at the other axial direction of the pin members 188, 190 are fitted into corresponding circular through holes (not appended reference numerals) formed in the retention plate 186. The pin members 188, 190 are fixed to the support member body 184 and the retention plate 186 by means such as swaging, welding, or the like, and the retention plate 186 is supported by the support member body 184 through the pin members 188, 190.

The thrust member 192 is formed by punching out and press-molding sheet metal, and has an elongated flat plate shape. The thrust member 192 has a length direction aligned with the reciprocating direction X and a plate thickness direction aligned with the spring-adjacency direction Y. The thrust member 192 is disposed between the pair of pin members 188, 190 and the flat spiral spring 34. Displacement of the thrust member 192 in the coil axis direction Z is restricted by the support member body 184 and the retention plate 186. A leading-end portion (an end portion on the retraction-direction X2 side) of the outer-end portion 34C of the flat spiral spring 34 is anchored (fixed in this example) to the thrust member 192 by the anchor member 40 (for example a rivet or screw).

The inner-end portion 34B of the flat spiral spring 34 and the anchor portion 92B of the back-up spring 92 are bent into substantially circular cylinder shapes having axial directions along the coil axis direction Z in a mutually superimposed state, and are wrapped around a circular column shaped anchor pin 194 projecting from the support member body 184. The anchor pin 194 is fixed to the support member body 184 by means such as swaging, welding, or the like, such that the anchor portion 92B and the inner-end portion 34B are anchored to the support member 102 through the anchor pin 194.

An abutting portion 184A is formed at an end portion on the opposite side of the support member body 184 to the side on which the thrust member 192 is disposed, so as to extend toward the inside (one side in the coil axis direction Z) of the back-up spring 92. The abutting portion 184A is curved into a circular arc shape concentric to the back-up spring 92, and contacts the inner circumferential face of the back-up spring 92. The back-up spring 92 is supported from the circumferential inside by the abutting portion 184A.

A pair of through holes 196, 198 are formed in the support member body 184 so as to penetrate through in the coil axis direction Z at a vicinity of the spring-adjacency direction Y center of the support member body 184. The through holes 196, 198 are disposed so as to be separated from each other in the reciprocating direction X. This thereby achieves a configuration in which the support member 182 is fixed to the cylinder block of a non-illustrated engine using bolts or the like inserted through the through holes 196, 198.

Other configuration of the present exemplary embodiment is similar to that of the fourth exemplary embodiment. The present exemplary embodiment accordingly also has the same basic operation and obtains similar advantageous effects as the fourth exemplary embodiment. Moreover, in the present exemplary embodiment the thrust member 192 is a component press-molded from sheet metal and has a flat plate shape. The thrust member 192 can therefore by manufactured by punching from sheet metal. This enables a reduction in size and weight to be achieved for the thrust member 192, and enables a further reduction in manufacturing costs. Moreover, in the present exemplary embodiment the support member 182 is predominantly configured from sheet metal, thereby facilitating a reduction in weight of the support member 182.

Moreover, in the present exemplary embodiment, the abutting portion 184A provided on the opposite side of the support member 182 to the thrust member 192 contacts the inner circumferential face of the back-up spring 92. The back-up spring 92 is accordingly supported in a cantilevered manner by the support member 182, facilitating uniform (even) deformation when the flat spiral spring 34 is being wound-up, and enabling localized wear to be suppressed from occurring in the flat spiral spring 34 and the back-up spring 92. Winding-up of the flat spiral spring 34 is also stabilized (it becomes easier to achieve even winding-up along the circumferential direction of the flat spiral spring 34). Moreover, part of the support member body 184 can be bent to form the abutting portion 184A, thereby facilitating manufacture of the abutting portion 184A, rendering additional components unnecessary, and enabling an increase in manufacturing costs to be suppressed.

### Eleventh Exemplary Embodiment

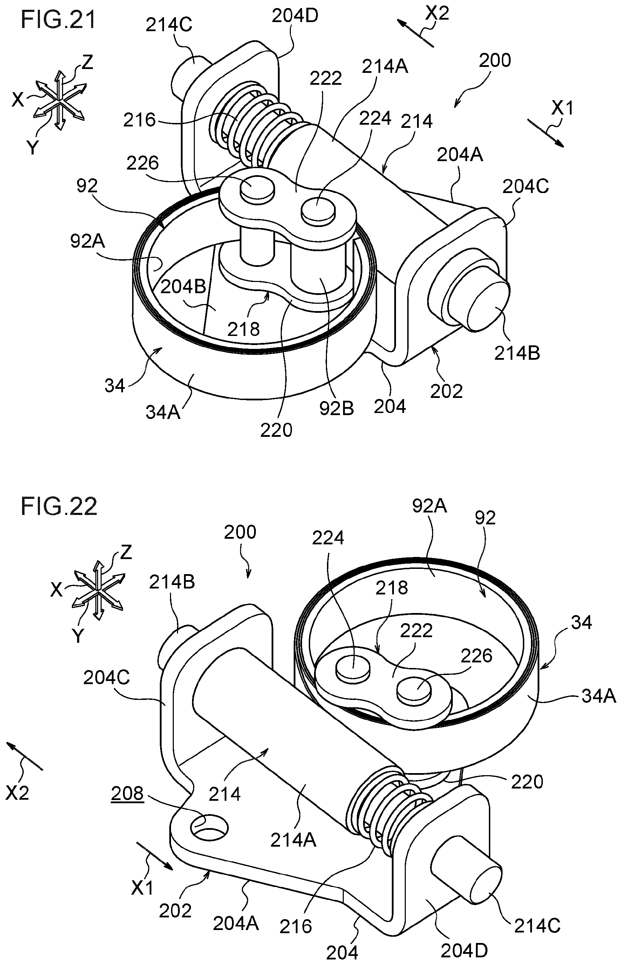

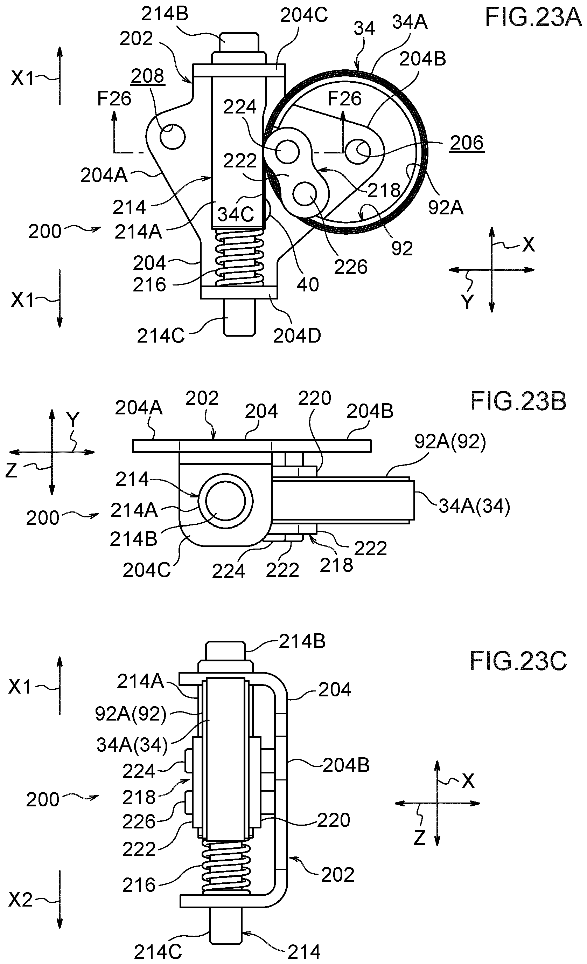

Fig. 21 and Fig. 22 are perspective views illustrating a tensioner 200 according to an eleventh exemplary embodiment of the present invention. Fig. 23A to Fig. 23C are respectively a front view, a plan view, and a side view of the tensioner 200. The tensioner 200 includes a support member 202, a thrust member 214, a flat spiral spring 34, and a back-up spring 92, and has the same basic configuration as the tensioner 90 according to the fourth exemplary embodiment. However, the configurations in the tensioner 200 of the support member 202 and the thrust member 214 are different from the configurations of the support member 12 and the thrust member 32 according to the fourth exemplary embodiment.

The support member 202 is formed by press-molding sheet metal, and includes a plate shaped support member body 204 having a plate thickness direction aligned with the coil axis direction Z. Fixing portions 204A, 204B are provided to the support member body 204 so as to extend toward both sides in the spring-adjacency direction Y. Through holes 206, 208 are respectively formed through the fixing portions 204A, 204B so as to penetrate through in the coil axis direction Z. A configuration is thereby adopted in which the support member 202 is fixed to the cylinder block of a non-illustrated engine using bolts or the like inserted through the through holes 206, 208.

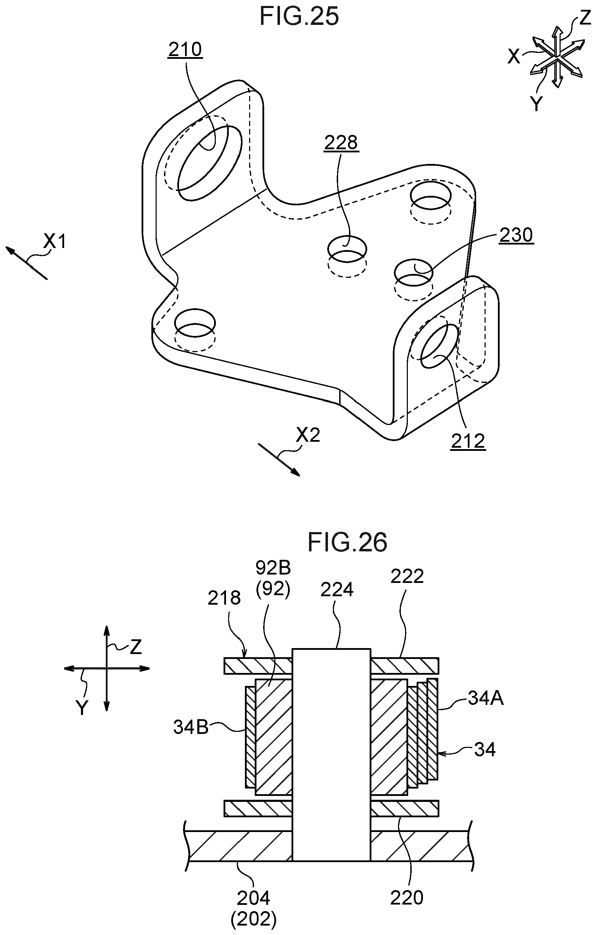

A leading-end side support portion 204C and a base-end side support portion 204D are integrally provided to two end portions of the support member body 204 in the reciprocating direction X so as to project out toward one side in the coil axis direction Z. The leading-end side support portion 204C and the base-end side support portion 204D are plate shaped with plate thickness directions aligned with the reciprocating direction X, and are each formed with substantially rectangular profiles as viewed along the reciprocating direction X. The leading-end side support portion 204C and the base-end side support portion 204D are formed with circular through holes 210, 212 (the reference numerals are omitted from illustration with the exception of in Fig. 25). The through hole 210 formed in the leading-end side support portion 204C is formed with a larger diameter than the through hole 212 formed in the base-end side support portion 204D. The through holes 210, 212 are provided so as to align with the thrust member 214 and be coaxial to each other.

The thrust member 214 is, for example, formed from a metal rod member with a stepped circular column profile, and is disposed with its axial direction running in the reciprocating direction X. An axial direction intermediate portion of the thrust member 214 configures a large diameter portion 214A, an end portion in one axial direction (an end portion on the forward-direction X1 side) of the thrust member 214 configures a leading end small diameter portion 214B having a smaller diameter than the large diameter portion 214A, and a location on the other axial direction end side (the retraction-direction X2 side) of the thrust member 214 configures a base-end small diameter portion 214C having a smaller diameter than the large diameter portion 214A. The large diameter portion 214A is notched on one side in the spring-adjacency direction Y (the right side in Fig. 23A) so as to have a D-shaped cut profile. The leading end side of the large diameter portion 214A is slidably fitted inside the through hole 210 of the leading-end side support portion 204C, and the base end side of the base-end small diameter portion 214C is slidably fitted inside the through hole 212 of the base-end side support portion 204D. The thrust member 214 is thus supported so as to be straight-line moveable (slidable) in the reciprocating direction X with respect to the support member 202.

A step is formed between the large diameter portion 214A and the base-end small diameter portion 214C. A compression coil spring 216 is provided between this step and the base-end side support portion 204D. The compression coil spring 216 is disposed coaxially to the thrust member 214 at the radial direction outside of the base-end small diameter portion 214C. The compression coil spring 216 is configured to impart resistance force (biasing force) to counter movement of the thrust member 214 in the retraction-direction X2. The flat spiral spring 34 and the back-up spring 92 are disposed at one side in the spring-adjacency direction with respect to the thrust member 214.

The outer-end portion 34C of the flat spiral spring 34 is superimposed on the large diameter portion 214A of the thrust member 214 from the one side in the spring-adjacency direction. A leading-end portion (an end portion on the retraction-direction X2 side) of the outer-end portion 34C is anchored (fixed in this example) to the large diameter portion 214A, in other words to the thrust member 32, by the anchor member 40 (for example a rivet or screw). The inner-end portion 34B of the flat spiral spring 34 and the anchor portion 92B of the back-up spring 92 are anchored to the support member 202 using a lateral slippage prevention member 218.

The lateral slippage prevention member 218 is configured by a pair of plates 220, 222, and a pair of pins 224, 226, and is formed in a shape resembling a chain link. The pair of plates 220, 222 are, for example, formed by press-molding sheet metal, have plate thickness directions aligned with the coil axis direction Z, and are formed with substantially oval profiles (substantially peanut profiles) as viewed along the reciprocating direction. A circular through hole (not appended with a reference numeral) is formed through each of the two length direction sides of the plates 220, 222. The plates 220, 222 are disposed adjacent to the large diameter portion 214A of the thrust member 214 on the one side in the spring-adjacency direction Y, and are disposed separated so as to lie on either side of the flat spiral spring 34 and the back-up spring 92 in the coil axis direction Z. The plates 220, 222 are disposed so as to be superimposed on each other as viewed along the coil axis direction Z, and are connected together by the pair of pins 224, 226.

The pair of pins 224, 226 are, for example, formed from metal rod members, and are disposed at the radial direction inside of the back-up spring 92 with their axial directions running in the coil axis direction Z. The pins 224, 226 are arrayed along the circumferential direction of the back-up spring 92 so as to follow the inner circumferential face of the back-up spring 92, and are disposed in close proximity to the thrust member 214. One of the pins, namely the pin 224, is disposed on the opposite side of the outer end 34A2 of the coil portion 34A of the flat spiral spring 34 to the thrust member 214, and the other of the pins, namely the pin 226, is disposed further toward the retraction-direction X2 side than the one pin 224. The pins 224, 226 are inserted through the respective through holes formed in the two length direction sides of each of the plates 220, 222, and the plates 220, 222 are fixed to the pins 224, 226 by means such as swaging or the like. End portions of the pins 224, 226 at one axial direction are fitted into a pair of through holes 228, 230 (see Fig. 25) formed in the support member body 204, and are fixed to the support member body 204 by means such as swaging, welding, or the like.

The inner-end portion 34B of the flat spiral spring 34 and the anchor portion 92B of the back-up spring 92 are anchored to the one pin 224. Specifically, the inner-end portion 34B of the flat spiral spring 34 and the anchor portion 92B of the back-up spring 92 are bent into a substantially circular cylinder profile having axial directions along the coil axis direction Z in a mutually superimposed state, and are wrapped around the one pin 224. The anchor portion 92B and the inner-end portion 34B are thus anchored to the support member 102 through the one pin 224.

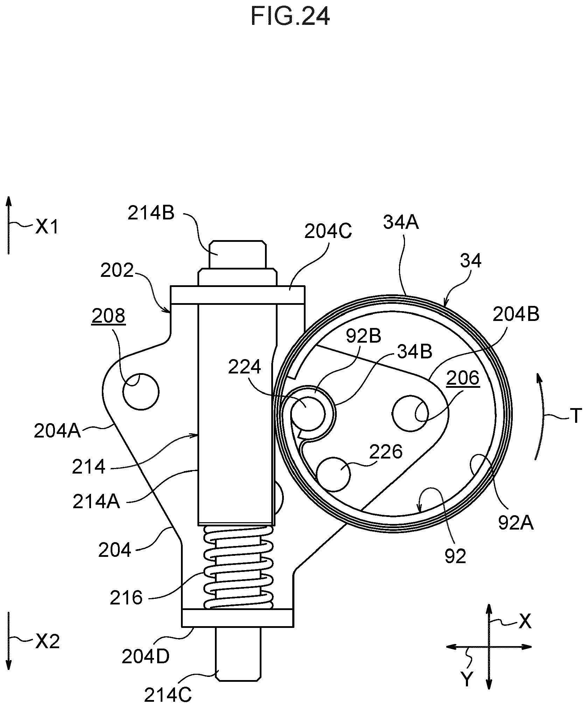

The other pin 226 contacts the inner circumferential face of the back-up spring 92 as illustrated in Fig. 24. The other pin 226 restricts rotation of the back-up spring 92 about the one pin 224 in the arrow T direction in Fig. 24. A location at the inner-end portion 34B side of the coil portion 34A of the flat spiral spring 34 and a location at the anchor portion 92B side of the back-up spring 92 are disposed between the pair of plates 220, 222, and are limited from undergoing displacement in the coil axis direction Z by the plates 220, 222 (see Fig. 26).

Other configuration of the present exemplary embodiment is similar to that according to the fourth exemplary embodiment. The present exemplary embodiment accordingly also has the same basic operation and obtains similar advantageous effects as the fourth exemplary embodiment. Moreover, in the present exemplary embodiment, since the support member 202 is a component press-molded from sheet metal, manufacturing cycle time can be reduced, and a reduction in manufacturing costs is facilitated, in comparison to cases in which manufacture of the support member 202 involves machining, forging, or the like. A reduction in weight of the support member 202 is also facilitated.

Moreover, in the present exemplary embodiment the other pin 226 of the lateral slippage prevention member 218 restricts rotation of the back-up spring 92 about the one pin 224 in the arrow T direction in Fig. 24. The back-up spring 92 is thus supported by the support member 202 in a cantilevered manner, facilitating uniform (even) deformation when the flat spiral spring 34 is being wound-up, and enabling localized wear on the flat spiral spring 34 and the back-up spring 92 to be suppressed. Winding-up of the flat spiral spring 34 is also stabilized (facilitating even winding-up along the circumferential direction of the flat spiral spring 34). Moreover, since preexisting components such as chain links may be employed in the manufacture of the lateral slippage prevention member 218, the above advantageous effect are obtainable at low cost. Moreover, in the present exemplary embodiment, the pair of plates 220, 222 of the lateral slippage prevention member 218 limit coil axis direction Z displacement of the coil portion 34A of the flat spiral spring 34, enabling laterally slippage of the coil portion 34A in the coil axis direction Z to be prevented or suppressed when the flat spiral spring 34 is being wound-up or unwound (see Fig. 26)

Moreover, in the present exemplary embodiment, the thrust member 214 is biased in the forward-direction X1 not only by the flat spiral spring 34 but also by the compression coil spring 216. The hysteresis effect is increased as the number of turns of the flat spiral spring 34 increases, resulting in an increased buffering effect with respect to input (vibration) from the timing belt or timing chain. However, doing so weakens the forward thrust in the X1 direction on the thrust member 214, and the thrust force pressing the chain guide might no longer be sufficiently obtained. Since the load of the compression coil spring 216 can be set as desired, independently of the flat spiral spring 34 and the back-up spring 92, a sufficient thrust force can be imparted to the thrust member 214 and sufficient tension can be induced in the timing chain or timing belt. The role of load absorption and the role of inducing tension can be separately set due to including both the flat spiral spring 34 and the compression coil spring 216.

### Twelfth Exemplary Embodiment

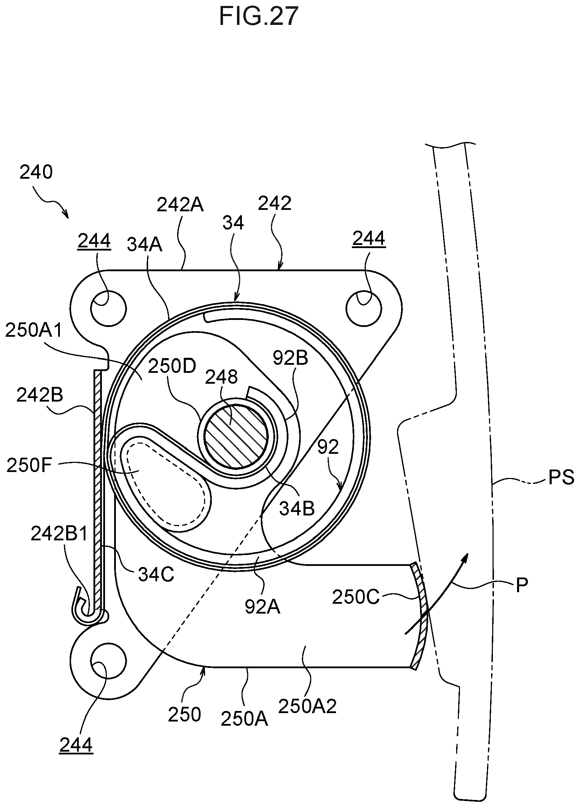

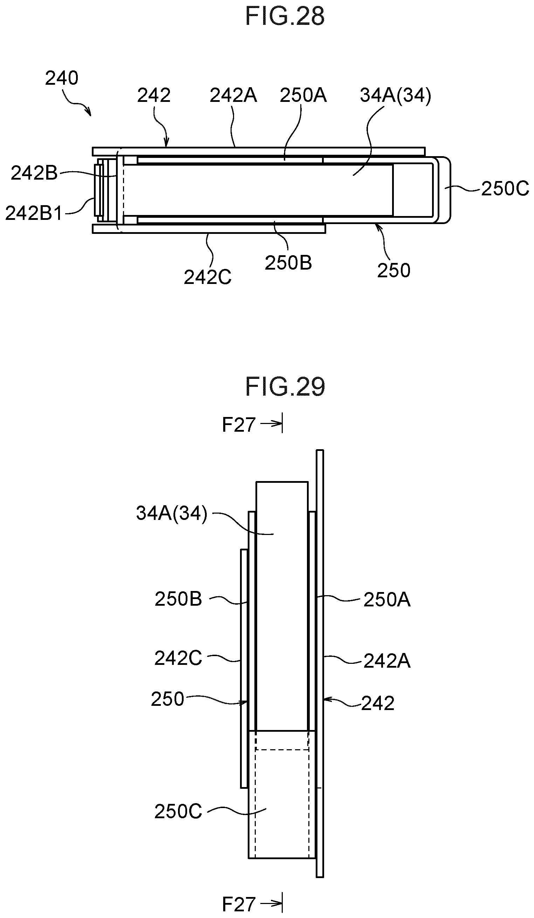

Fig. 27 is a partial cross-section illustrating a tensioner 240 according to a twelfth exemplary embodiment of the present invention, as viewed from the front side. Fig. 28 is a plan view illustrating the tensioner 240, and Fig. 29 is a side view illustrating the tensioner 240. The tensioner 240 includes a support member 242, a pressing member 250 supported so as to be capable of rotating with respect to the support member 242, a flat spiral spring 34 to bias the pressing member 250 in one rotation direction, and a back-up spring 92 disposed at the radial direction inside of the flat spiral spring 34.

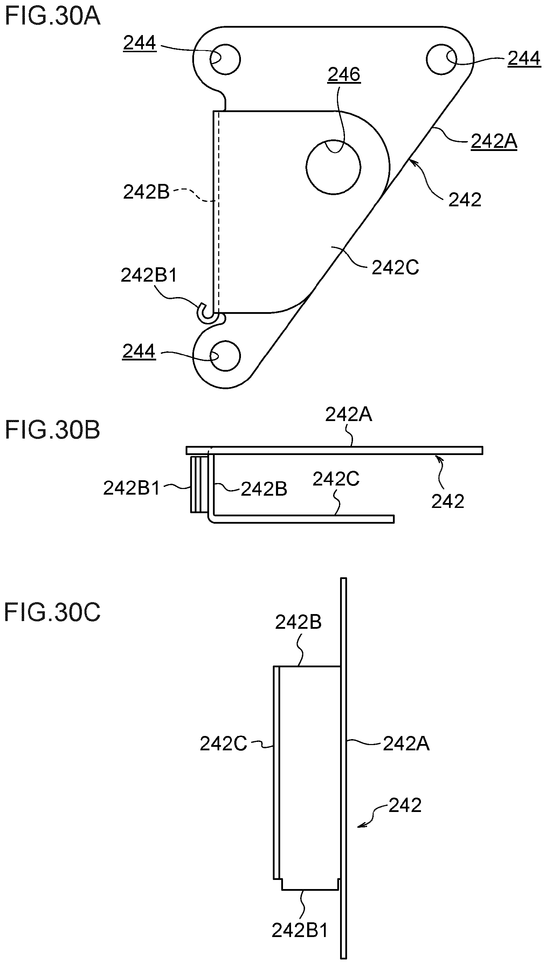

As illustrated in Fig. 27 to Fig. 30C, the support member 242 is a component press-molded from sheet metal, and includes a main body wall 242A formed in an elongated plate shape having a plate thickness direction aligned with a coil axis direction of the flat spiral spring 34. The main body wall 242A has a substantially triangular profile (substantially right-angled triangular profile) as viewed along the coil axis direction Z, formed such that a width dimension of the main body wall 242A increases on progression toward one side in the length direction (the upper side in Fig. 27 and Fig. 30A). A through hole 244 is formed penetrating the main body wall 242A at each of the three corners of the main body wall 242A. This thereby achieves a configuration in which the support member 242 is fixed to the cylinder block of a non-illustrated engine using bolts or the like inserted through the through holes 244.

A sidewall 242B is integrated to one width direction end portion of the main body wall 242A and extends therefrom toward one side in the plate thickness direction of the main body wall 242A. A retaining wall 242C is integrated to an end portion of the sidewall 242B on the opposite side to the main body wall 242A and extends therefrom toward the other width direction side of the main body wall 242A. The retaining wall 242C extends parallel to the main body wall 242A and has a substantially trapezoidal profile as viewed along the coil axis direction of the flat spiral spring 34. One-end portion of the sidewall 242B is bent into a circular arc shape so as to form a spring anchor portion 242B1. Circular through holes 246 are respectively formed so as to pierce through the main body wall 242A and the retaining wall 242C. The through holes 246 are disposed coaxially to each other. A circular column shaped support shaft 248 (see Fig. 27) is fitted into the through holes 246. The support shaft 248 is, for example, formed from a metal rod member, and is fixed to the main body wall 242A and the retaining wall 242C by means such as swaging, welding, or the like. The pressing member 250 is rotatably supported by the support shaft 248.

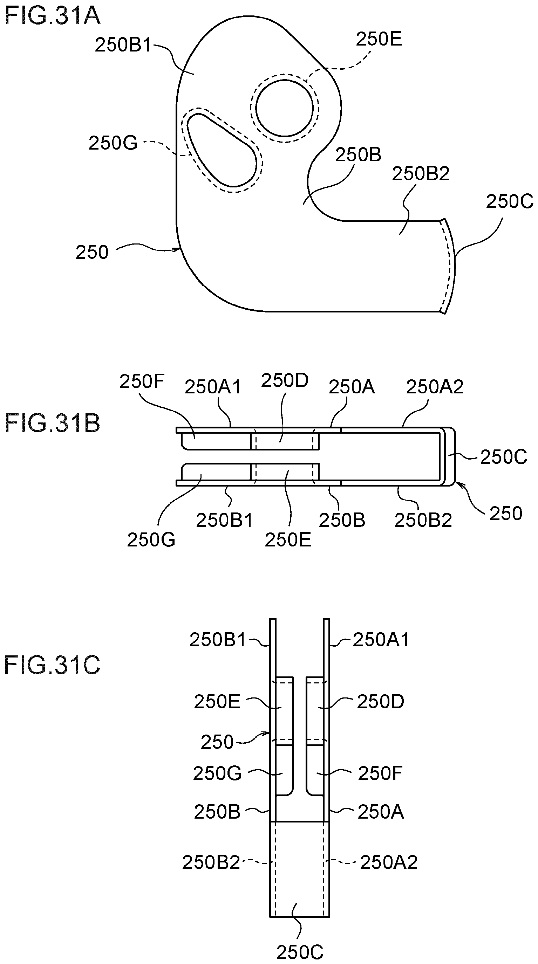

As illustrated in Fig. 27 to Fig. 29 and in Fig. 31A to Fig. 31C, the pressing member 250 is a component press-molded from sheet metal, and includes a pair of opposing walls 250A, 250B that oppose each other in the coil axis direction of the flat spiral spring 34. The opposing walls 250A, 250B are each formed with a substantially L-shaped profile as viewed along the coil axis direction of the flat spiral spring 34. The opposing walls 250A, 250B include respective main body portions 250A1, 250B1 extending in the length direction of the main body wall 242A (corresponding to the up-down direction in Fig. 27), and respective arm portions 250A2, 250B2 extending from one-end side of the main body portions 250A1, 250B1 in the length direction (corresponding to the lower side in Fig. 27). The arm portions 250A2, 250B2 extend toward one side in a direction orthogonal to the length of the main body portions 250A1, 250B1 (corresponding to the right side in Fig. 27). Leading-end portions of the respective arm portions 250A2, 250B2 are integrally connected together by a pressing portion 250C extending in the coil axis direction of the flat spiral spring 34.

The main body portions 250A1, 250B1 are disposed between the main body wall 242A and the retaining wall 242C of the support member 242. Circular cylinder shaped shaft bearings 250D, 250E are formed to the main body portions 250A1, 250B1 so as to project toward each other. The support shaft 248 described above is rotatably fitted inside the shaft bearings 250D, 250E. The pressing member 250 is thus rotatably supported by the support member 242 through the support shaft 248. The pressing portion 250C of the pressing member 250 is configured to press-contact a pressing target PS (a chain guide or belt guide in the present example) so as press toward one rotation direction of the pressing member 250 (see the arrow P in Fig. 27).

Respective protrusions 250F, 250G are formed on the main body portions 250A1, 250B1 so as to protrude toward one another. The protrusions 250F, 250G have substantially oval profiles as viewed along the coil axis direction of the flat spiral spring 34, and are disposed between the shaft bearings 250D, 250E (support shaft 248) and the sidewall 242B. An inner-end portion 34B of the flat spiral spring 34 and an anchor portion 92B of the back-up spring 92 are wrapped around the protrusions 250F, 250G and the shaft bearings 250D, 250E. Specifically, the inner-end portion 34B of the flat spiral spring 34 and the anchor portion 92B of the back-up spring 92 are bent into a substantially S-shape when in a mutually superimposed state, and wrapped around the protrusions 250F, 250G and the shaft bearings 250D, 250E in a state in which parts thereof are nipped between the protrusions 250F, 250G and the shaft bearings 250D, 250E. The inner-end portion 34B and the anchor portion 92B are thus anchored to the pressing member 250, and also anchored to the support member 242 through the shaft bearings 250D, 250E and the support shaft 248. An outer-end portion 34C of the flat spiral spring 34 is superimposed on the sidewall 242B of the support member 242. A leading-end portion of the outer-end portion 34C is bent into a circular arc shape and anchored to (hooked onto) the spring anchor portion 242B1 of the sidewall 242B. The flat spiral spring 34 biases the pressing member 250 in one rotation direction with respect to the support member 242 (the arrow P direction in Fig. 27), in a configuration in which the flat spiral spring 34 is wound-up by rotation of the pressing member 250 in the other rotation direction.

Note that although the flat spiral spring 34 is disposed coaxially to the pressing member 250 in the present exemplary embodiment, there is no limitation thereto, and a configuration may be adopted in which the flat spiral spring 34 is disposed off-center with respect to the pressing member 250. Namely, a configuration may be adopted in which the center axis of the flat spiral spring 34 and the rotation axis of the pressing member 250 are disposed so as to be offset in a radial direction from one another.

In the tensioner 240 configured as described above, the contact-type flat spiral spring 34 biases the pressing member 250 in the one rotation direction with respect to the support member 242, such that the pressing member 250 press-contacts the pressing target PS, i.e. the belt guide or chain guide. The tension of the belt or chain is thereby maintained.

Moreover, the pressing member 250 is rotated in the other rotation direction with respect to the support member 242 when the belt or chain presses the pressing member 250 in a state in which the tension of the belt or chain is being maintained, and the contact-type flat spiral spring 34 is wound-up. When this occurs, energy of load input to the pressing member 250 can be effectively attenuated by inter-plate friction and the like arising in the contact-type flat spiral spring 34. This enables a simpler configuration to be achieved than in configurations equipped with an attenuation device including a damping bush and belt spring. Moreover, since a configuration is adopted in which the pressing member 250, which is a component press-molded from sheet metal, makes direct press-contact with the pressing target PS, a simpler configuration can be achieved than configurations in which a roller carrier with attached pulley is supported so as to be capable of pivoting with respect to a housing. The present exemplary embodiment is thus capable of simplifying a basic configuration for a tensioner provided with a support member, a thrust member, a spring, and a damping section. Moreover, since the tensioner 240 includes the back-up spring 92 configured similarly to the back-up spring 92 according to the fourth exemplary embodiment, the attenuation effect (hysteresis characteristics) described above can be improved.

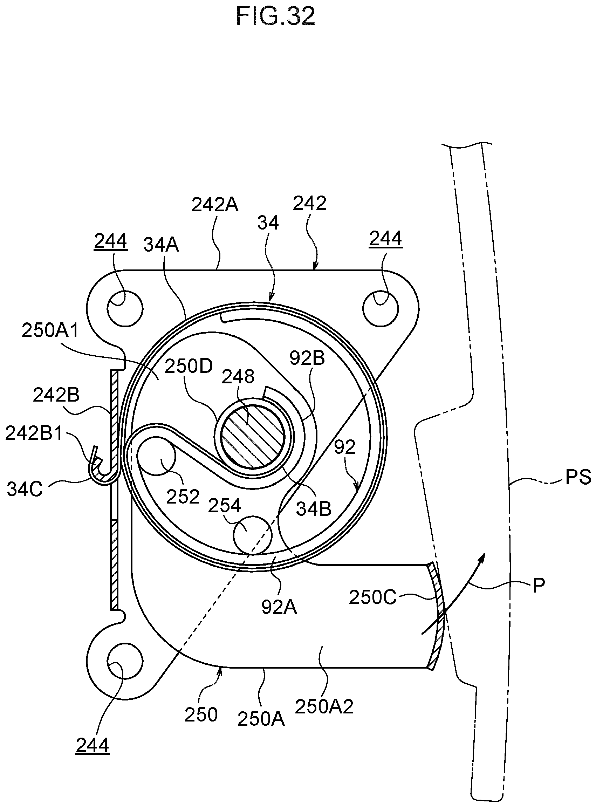

Note that in the twelfth exemplary embodiment described above a pair of pins 252, 254 may be employed instead of the protrusions 250F, 250G, as in the modified example illustrated in Fig. 32. In such cases the pair of pins 252, 254 span between the opposing walls 250A, 250B of the pressing member 250. In this modified example, a spring anchor portion 242B1 is formed by a length direction intermediate portion of the sidewall 242B being cut out and bent up.

Moreover, although in the twelfth exemplary embodiment a configuration is adopted in which the outer-end portion 34C of the flat spiral spring 34 is anchored to the support member 242 and the inner-end portion 34B of the flat spiral spring 34 is anchored to the pressing member 250, there is no limitation thereto. A configuration may be adopted in which an inner-end portion of a flat spiral spring is anchored to a support member and an outer-end portion of a flat spiral spring is anchored to a pressing member.

### Supplementary Explanation Regarding Back-Up Spring

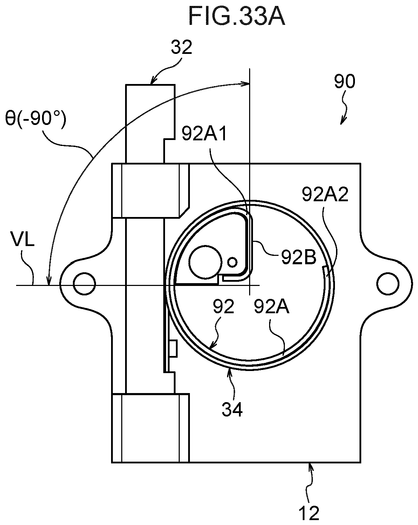

Next, supplementary explanation follows regarding the back-up spring 92 described above, with reference to Fig. 33A to Fig. 35. Fig. 33A to Fig. 33G illustrate a tensioner 90 similar to the tensioner 90 according to the fourth exemplary embodiment. However, a phase θ of the back-up spring 92 with respect to the thrust member 32 (placement of the one-end portion 92A1 of the ring-shaped portion 92A with respect to the virtual straight line VL) is different in each of Fig. 33A to Fig. 33G. Note that for clarity some reference numerals are omitted from Fig. 33A to Fig. 33G.

Fig. 33A illustrates a state in which the one-end portion 92A1 (end portion on the anchor portion 92B side) of the ring-shaped portion 92A is disposed at a position located at -90° (a position rotated by 90° in the unwind direction) about the center S of the ring-shaped portion 92A with respect to the virtual straight line VL (i.e. illustrates a state in which the phase θ of the back-up spring 92 has been set to -90°).

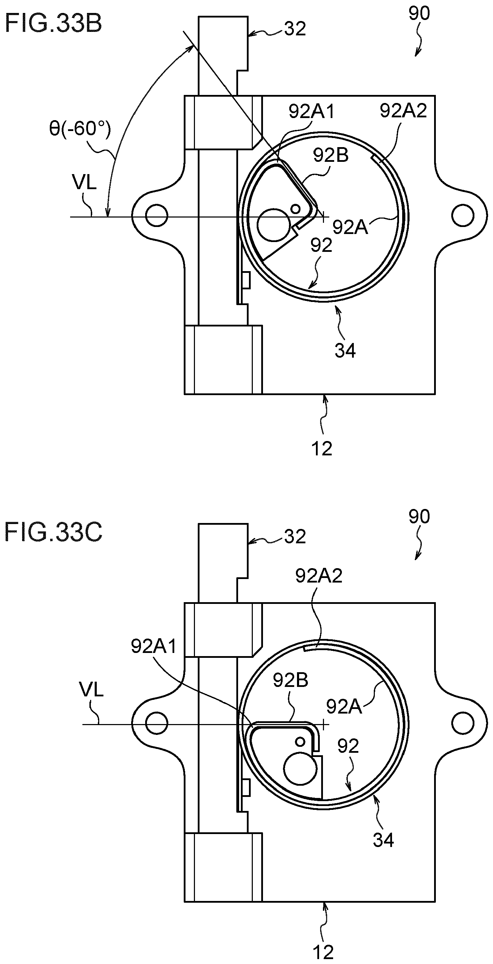

Fig. 33B illustrates a state in which the one-end portion 92A1 (end portion on the anchor portion 92B side) of the ring-shaped portion 92A is disposed at a position located at -60° (a position rotated by 60° in the unwind direction) about the center S of the ring-shaped portion 92A with respect to the virtual straight line VL (i.e. illustrates a state in which the phase θ of the back-up spring 92 has been set to -60°).

Fig. 33C illustrates a state in which the one-end portion 92A1 of the ring-shaped portion 92A is disposed at a position located at 0° about the center S of the ring-shaped portion 92A with respect to the virtual straight line VL (i.e. illustrates a state in which the phase θ of the back-up spring 92 has been set to 0°). In this state, the number of turns of the flat spiral spring 34 is set to 2.0 full turns.

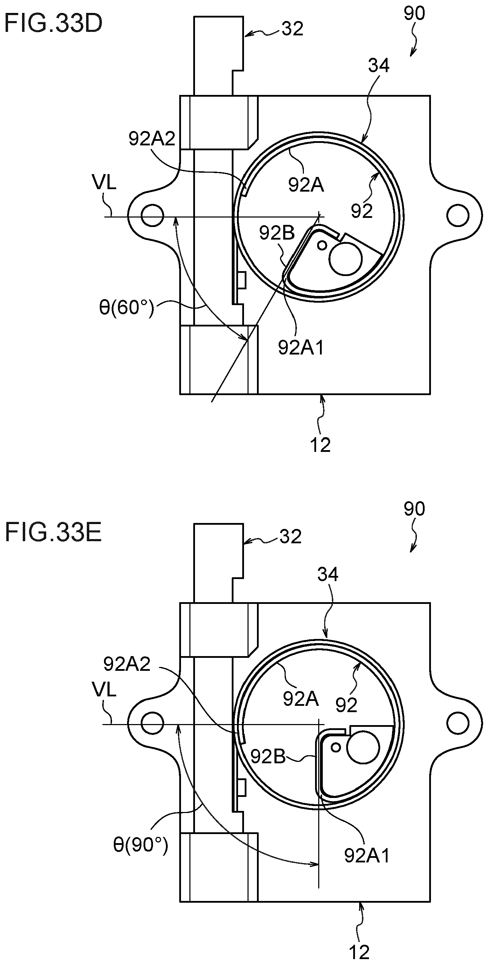

Fig. 33D illustrates a state in which the one-end portion 92A1 of the ring-shaped portion 92A is disposed at a position located at 60° (a position rotated by 60° in the wind-up direction) about the center S of the ring-shaped portion 92A with respect to the virtual straight line VL (i.e. illustrates a state in which the phase θ of the back-up spring 92 has been set to 60°).

Fig. 33E illustrates a state in which the one-end portion 92A1 of the ring-shaped portion 92A is disposed at a position located at 90° (a position rotated by 90° in the wind-up direction) about the center S of the ring-shaped portion 92A with respect to the virtual straight line VL (i.e. illustrates a state in which the phase θ of the back-up spring 92 has been set to 90°).

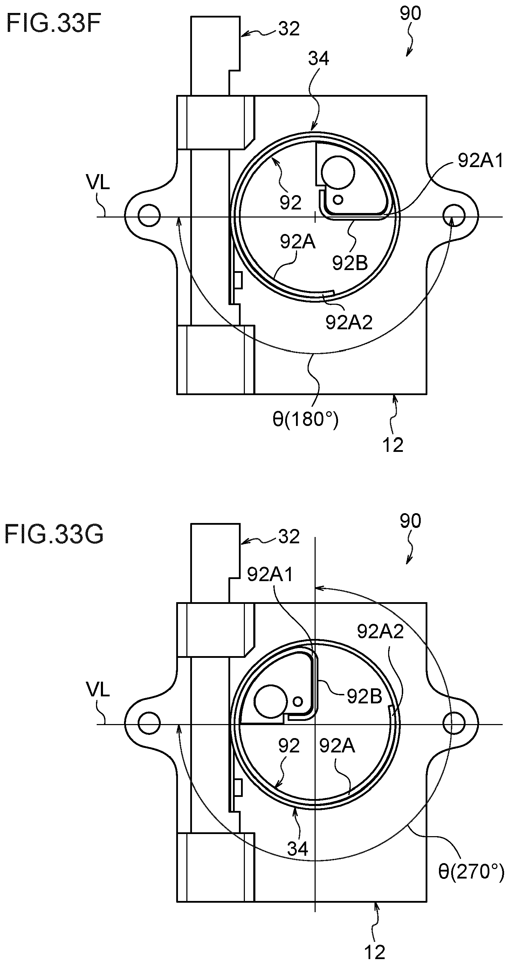

Fig. 33F illustrates a state in which the one-end portion 92A1 of the ring-shaped portion 92A is disposed at a position located at 180° (a position rotated by 180° in the wind-up direction) about the center S of the ring-shaped portion 92A with respect to the virtual straight line VL (i.e. illustrates a state in which the phase θ of the back-up spring 92 has been set to 180°). In this state, the number of turns of the flat spiral spring 34 is set to 1.5 full turns.

Fig. 33G illustrates a state in which the one-end portion 92A1 of the ring-shaped portion 92A is disposed at a position located at 270° (a position rotated by 270° in the wind-up direction) about the center S of the ring-shaped portion 92A with respect to the virtual straight line VL (i.e. illustrates a state in which the phase θ of the back-up spring 92 has been set to 270°). Note that although not illustrated in the drawings, in a state in which the phase θ of the back-up spring 92 has been set to 360°, the number of turns of the flat spiral spring 34 would be set to 1.0 full turns.

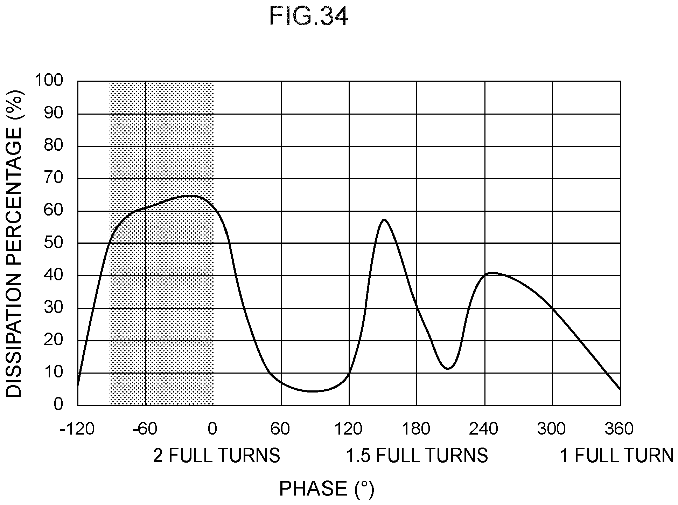

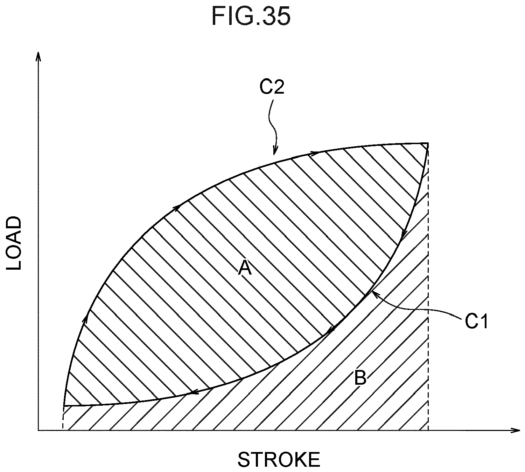

Fig. 34 is a graph illustrating a relationship between a dissipation percentage of energy for load input to the thrust member 32 with respect to the phase θ of the back-up spring 92. Fig. 35 is a graph illustrating a relationship between input load to the thrust member 32 and stroke of the thrust member 32. In Fig. 35, C2 indicates a curve representing a relationship between load input to the thrust member 32 and stroke of the thrust member 32 in the retraction-direction X2, and C1 indicates a curve representing a relationship between load input to the thrust member 32 and stroke of the thrust member 32 in the forward-direction X1. The dissipation percentage mentioned above is based on the relationship between the area of the region A and the area of the region B in Fig. 35, and is calculated as dissipation percentage = A/(A + B).

As illustrated in Fig. 34, it has been confirmed that the dissipation percentage is much higher, namely greater attenuation performance is obtained, when the phase θ of the back-up spring 92 is set in a range of from -90° to 0° (the range indicated by dots in Fig. 34) than when the phase θ of the back-up spring 92 is set in other ranges. Due to fluctuations in the dissipation percentage being small and a stable dissipation percentage being achieved in this range, this range has been confirmed as the optimum phase for attachment of the back-up spring 92. Note that the dissipation percentage varies depending on the number of turns of the flat spiral spring 34. For example, were the number of turns of the flat spiral spring 34 to be 1.0 full turn, then the inter-plate friction arising in the flat spiral spring 34 would be insufficient, reducing the dissipation percentage. However, when the number of turns of the flat spiral spring 34 is at least 2.0 full turns, the inter-plate friction in the flat spiral spring 34 increases, and the dissipation percentage is higher. The number of turns of the flat spiral spring 34 is therefore preferably set to at least 2.0 full turns. However, even though the number of turns of the flat spiral spring 34 is increased, the dissipation percentage sometimes drops depending on the phase of the back-up spring 92. The phase θ of the back-up spring 92 is therefore preferably set in the aforementioned range, and the number of turns of the flat spiral spring 34 is preferably set to from 2.0 to 2.25 full turns.

Although several exemplary embodiments of the present invention have been described above, various modifications may also be implemented within a range not departing from the spirit of the present invention. Obviously, the scope of rights encompassed by the present invention is not limited by the respective exemplary embodiments described above.

The disclosure of Japanese Patent Application No. 2018-145336, filed on August 1, 2018, is incorporated in its entirety by reference herein. All cited documents, patent applications, and technical standards mentioned in the present specification are incorporated by reference in the present specification to the same extent as if each individual cited document, patent application, or technical standard was specifically and individually indicated to be incorporated by reference.

## Claims

1. A tensioner comprising:
a support member;
a thrust member supported so as to be capable of reciprocating movement in a straight line along a first direction with respect to the support member; and
a contact-type flat spiral spring disposed adjacent to the thrust member in a second direction orthogonal to the first direction, the flat spiral spring having a coil axis direction running in a third direction orthogonal to both the first direction and the second direction and including an inner-end portion anchored to the support member and an outer-end portion anchored to the thrust member so as to bias the thrust member in a forward-direction and so as to be wound-up by movement of the thrust member in a retraction-direction.

2. A tensioner comprising:
a support member;
a thrust member supported so as to be capable of reciprocating movement in a straight line along a first direction with respect to the support member;
a swing member disposed adjacent to the thrust member in a second direction orthogonal to the first direction with a swing-axis direction running in a third direction orthogonal to both the first direction and the second direction so as to be swung on a circular arc trajectory interlocked to reciprocating movement of the thrust member; and
a contact-type flat spiral spring disposed so as to have a coil axis direction running in the third direction and so as to be concentric to the swing axis of the swing member, the flat spiral spring including an inner-end portion anchored to the support member and an outer-end portion anchored to the swing member so as to bias the thrust member in a forward-direction through the swing member and so as to be wound-up by movement of the thrust member in a retraction-directi on.

3. A tensioner comprising:
a support member;
a pressing member that is a component press-molded from sheet metal and supported so as to be capable of rotating with respect to the support member so as to be press-contacted against a pressing target in one rotation direction; and
a contact-type flat spiral spring having a coil axis direction running in a rotation axis direction of the pressing member and including an inner-end portion and an outer-end portion, with one of the inner-end portion or the outer-end portion being anchored to the support member and another of the inner-end portion or the outer-end portion being anchored to the pressing member so as to bias the pressing member in the one rotation direction, and so as to be wound-up by rotation of the pressing member in another rotation direction.

4. The tensioner of any one of claim 1 to claim 3, further comprising a resistance force imparting section disposed inside the flat spiral spring so as to impart resistance force with respect to counter radial contraction of the flat spiral spring.

5. The tensioner of claim 4, wherein the resistance force imparting section includes:
a plurality of press-contact members arrayed in a circumferential direction of the flat spiral spring; and
a biasing member to bias the plurality of press-contact members toward a radial direction outer side of the flat spiral spring so as to press-contact an inner circumferential face of the flat spiral spring.

6. The tensioner of claim 4, wherein:
the resistance force imparting section is a back-up spring configured from a plate-shaped spring material; and
the back-up spring includes
a ring-shaped portion formed in a ring shape concentric to the flat spiral spring with an outer circumferential face contacting an inner circumferential face of the flat spiral spring, and
an anchor portion extending from a one-end portion of the ring-shaped portion toward a center of the ring-shaped portion and anchored to the support member.

7. The tensioner of claim 6, further comprising:
a radial-contraction restriction member supported so as to be capable of rotating about an axis running in the third direction with respect to the support member, and engaged with another-end portion of the ring-shaped portion; and
a rotation limiting section configured to permit rotation of the radial-contraction restriction member with respect to the support member in one direction about the axis interlocked to radial enlargement of the ring-shaped portion, and to limit rotation of the radial-contraction restriction member with respect to the support member in another direction about the axis interlocked to radial contraction of the ring-shaped portion.

8. The tensioner of claim 6, wherein:
taking a rotation direction to wind-up the flat spiral spring as being a wind-up direction and a rotation direction to unwind the flat spiral spring as being an unwind direction, the ring-shaped portion extends from the anchor portion in the wind-up direction; and
as viewed along the third direction, the one-end portion of the ring-shaped portion is disposed in a range from a position at 0° to a position at 90° in the unwind direction about the center of the ring-shaped portion with respect to a virtual straight line extending along the second direction from the center of the ring-shaped portion toward the thrust member.

9. The tensioner of either claim 6 or claim 8, wherein the ring-shaped portion is formed by the plate-shaped spring material being wound into at least 1.0 full turn.

10. The tensioner of any one of claim 1 to claim 6, further comprising a retraction limiting section configured to permit movement of the thrust member in the forward-direction with respect to the support member and to limit movement of the thrust member in the retraction-direction with respect to the support member.

11. The tensioner of claim 1 or of any one of claim 4 to claim 10 when dependent from claim 1, wherein as viewed along the first direction, the thrust member has an open cross-section profile open on a flat spiral spring side, and a portion that includes the outer-end portion of the flat spiral spring is disposed inside the thrust member.

12. The tensioner of claim 1 or of any one of claim 4 to claim 11 when dependent from claim 1, wherein the thrust member is a component press-molded from sheet metal.

13. The tensioner of claim 1 or of any one of claim 4 to claim 10 when dependent from claim 1, wherein the thrust member is a component press-molded from sheet metal and has a flat plate shape.

14. The tensioner of any one of claim 1 to claim 13, wherein the support member is a component press-molded from sheet metal.
